# FASCICULE DE BREVET EUROPEEN

(11) **EP 3 768 424 B1**
(45) Date de publication et mention de la délivrance du brevet: **02.03.2022**
(21) Numéro de dépôt: 19742413.8
(22) Date de dépôt: 14.03.2019
(51) Int. Cl.: B01J 31/22, C09J 201/10, C08L 101/10

(54) **COMPOSITION CATALYTIQUE POUR COMPOSITION ADHESIVE A BASE DE POLYMERE SILYLE RETICULABLE**
KATALYTISCHE ZUSAMMENSETZUNG FÜR EINE KLEBSTOFFZUSAMMENSETZUNG AUF BASIS EINES VERNETZBAREN SILYLIERTEN POLYMERS
CATALYTIC COMPOSITION FOR AN ADHESIVE COMPOSITION BASED ON A CROSS-LINKABLE SILYLATED POLYMER

(30) Priorité: 21.03.2018 FR 1852398
(43) Date de publication de la demande: 27.01.2021
(73) Titulaire: Bostik SA, 92700 Colombes (FR)
(72) Inventeur: LAFERTE, Olivier, 60280 VENETTE (FR); DELMOTTE, Bruno, 60280 VENETTE (FR); COLIN, Boris, 60280 VENETTE (FR)
(74) Mandataire: Arkema Patent
(86) Numéro de dépôt international: PCT/FR2019/050571
(87) Numéro de publication internationale: WO 2019/186014

(56) Documents cités:
- EP-A2- 0 389 235
- WO-A1-2017/216446

## Description

La présente invention a pour objet une composition adhésive comprenant au moins un polymère silylé réticulable et une composition catalytique. Elle concerne également ladite composition catalytique, ainsi qu'un procédé de collage comprenant l'application de ladite composition adhésive.

Les polymères silylés peuvent être utilisés dans différents types d'applications, par exemple dans des compositions adhésives utilisables pour tous types de collage tel que le collage de revêtements de surface, ou encore utilisables pour former une membrane d'étanchéité ou encore pour préparer des articles auto-adhésifs.

Les polymères silylés peuvent être réticulés même à température ambiante par réaction du groupement silylé réactif avec l'humidité de l'air. Afin d'accélérer la réticulation du polymère silylé, il est possible d'ajouter au polymère silylé un catalyseur de réticulation.

Généralement, le catalyseur de réticulation utilisé dans des compositions adhésives à base de polymères silylés est un catalyseur à base d'étain, tel que le dilaurate de dibutylétain (DBTDL), le diacétate de dibutylétain, le bis(acétylacétonate) de dibutylétain ou encore le dioctylétain.

Cependant, la toxicité de ces catalyseurs à base d'étain est de plus en plus mise en avant, ce qui conduit les industriels à éviter leur utilisation.

Des catalyseurs sans étain ont été développés pour la réticulation de polymères silylés, parmi lesquels on peut citer le néodécanoate de bismuth ou l'octoate ou néodécanoate de zinc. Ces catalyseurs sans étain sont 2 à 3 fois moins efficaces que les catalyseurs à base d'étain. Ainsi, pour obtenir des temps de réticulation équivalents à ceux obtenus avec les catalyseurs à base d'étain, il sera nécessaire d'introduire 2 à 3 fois plus de catalyseur de type néodécanoate de bismuth ou octoate de zinc.

Le catalyseur de réticulation doit permettre d'accélérer la réticulation du polymère silylé lors de son utilisation. Il doit aussi rester stable lors du stockage de la composition adhésive avant emploi ; en d'autres termes il doit conserver sa capacité à accélérer la réticulation dudit polymère, après le stockage de la composition adhésive jusqu'à sa mise en œuvre par l'utilisateur final.

En outre, pour une utilisation optimale de la composition adhésive, ladite composition adhésive ne doit pas réticuler lors de son stockage.

La demande WO 2017/216446 décrit une composition adhésive comprenant un polymère silylé et, comme catalyseur, un composé métallique obtenu pas réaction d'un alkoxyde métallique avec une oxime. Toutefois la vitesse de réticulation de ladite composition adhésve reste encore à améliorer.

La demande EP 0 389 235 A2 décrit une composition adhésive comprenant un polydiméthylsiloxane terminé par des groupes triméthoxysilyléthylène et un composé oxime.

La présente invention a pour but de proposer une nouvelle composition adhésive réticulable dépourvue d'étain, en particulier d'alkyl étain, qui présente un temps de réticulation amélioré, tout en présentant une bonne stabilité, en particulier lors du stockage.

Un autre but de la présente invention est de proposer une composition catalytique dépourvue d'étain dont l'efficacité pour réticuler un polymère silylé est améliorée.

Un autre but de la présente invention est de proposer une composition catalytique dépourvue d'étain, en particulier d'alkyl étain, qui confère des propriétés mécaniques améliorées au joint adhésif formé par la réticulation de ladite composition adhésive réticulable.

La présente invention a pour objet en premier lieu une composition adhésive comprenant :
- au moins un polymère silylé (A) comprenant au moins un, de préférence au moins deux groupements de formule (I) :

   -Si(R⁴)ₚ(OR⁵)₃₋ₚ (I)

   dans laquelle :
   - R⁴ représente un radical alkyl linéaire ou ramifié comprenant de 1 à 4 atomes de carbone, avec la possibilité que, quand il y a plusieurs radicaux R⁴, ces derniers soient identiques ou différents ;
   - R⁵ représente un radical alkyl linéaire ou ramifié comprenant de 1 à 4 atomes de carbone, avec la possibilité que, quand il y a plusieurs radicaux R⁵, ces derniers soient identiques ou différents, avec la possibilité que deux groupements OR⁵ puissent être engagés dans un même cycle ;
   - p est un nombre entier égal à 0, 1 ou 2, de préférence égal à 0 ou 1 ; et
- une composition catalytique (B) comprenant :
   - une amine tertiaire (C) de pKa supérieur à 11 ; et
   - un composé organométallique (D) obtenu par réaction d'au moins un alkoxyde métallique (D1) se présentant sous la formule (VIII):

      M(OR)_{y} (VIII)

      dans laquelle :
      - M représente un atome de métal choisi parmi le titane, le zirconium, l'aluminium, lezinc, le bismuth, le silicium, le hafnium, le barium, le cérium, le césium, le rubidium ou l'antimoine,
      - y est égal à 1, 2, 3 ou 4 selon la valence de l'atome de métal M, et
      - R représente un groupement alkyle, alkényle, carbonyl-alkyle, ou carbonyl-alkényle, ledit radical alkyle ou alkényle comprenant de 1 à 22 atomes de carbone, de préférence de 1 à 15 atomes de carbone;
      - avec au moins une oxime (D2) choisie parmi une oxime de formule (V) ou une oxime de formule (VI) : 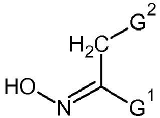 dans lesquelles : 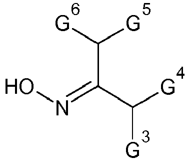
         - G¹ est un atome d'hydrogène ou un radical alkyle linéaire ou ramifié comprenant de 1 à 4 atomes de carbone ;
         - G² est un atome d'hydrogène ou un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle ou un radical -N(G⁷G⁸) où G⁷ et G⁸ représentent, indépendamment l'un de l'autre, un radical alkyle linéaire ou ramifié comprenant de 1 à 10 atomes de carbone ou un radical alkényle linéaire ou ramifié comprenant de 2 à 10 atomes de carbone ou un radical benzyle ;
         - G³ représente soit un atome d'hydrogène, soit un groupement alkyle ayant de 1 à 4 atomes de carbone, soit forme le reste d'un cycle aliphatique ayant entre 4 et 14 atomes de carbone avec les groupements G⁴ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
         - G⁴ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone ;
         étant entendu qu'au moins un des groupements G³ ou G⁴ forme le reste d'un cycle aliphatique avec au moins un des groupements G⁵ ou G⁶ ;
         - G⁵ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
         - G⁶ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁵, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
         - étant entendu qu'au moins un des groupements G⁵ ou G⁶ forme le reste d'un cycle aliphatique avec au moins un des groupements G³ ou G⁴.

Il a été trouvé que la présence, dans la composition catalytique (B), de l'amine tertiaire (C) permet, de manière surprenante, d'abaisser significativement le temps de réticulation de la composition adhésive, relativement à la demande WO 2017/216446, la stabilité de (B) restant par ailleurs tout à fait satisfaisante.

Au sens de la présente invention, l'expression « composition adhésive » désigne également des compositions de mastic ou des compositions de revêtement de surface.

La composition selon l'invention est réticulable en présence d'humidité ou après humidification.

### Polymère silylé (A)

Au sens de la présente invention, on entend par polymère silylé, un polymère comportant au moins un groupement alkoxysilane. De préférence, le polymère silylé comportant au moins un groupement alkoxysilane est un polymère comprenant au moins un, de préférence au moins deux groupements de formule (I) :

-Si(R⁴)ₚ(OR⁵)₃₋ₚ (I)

dans laquelle :
- R⁴ représente un radical alkyl linéaire ou ramifié comprenant de 1 à 4 atomes de carbone, avec la possibilité que quand il y a plusieurs radicaux R⁴, ces derniers soient identiques ou différents ;
- R⁵ représente un radical alkyl linéaire ou ramifié comprenant de 1 à 4 atomes de carbone, avec la possibilité que quand il y a plusieurs radicaux R⁵, ces derniers soient identiques ou différents, avec la possibilité que deux groupements OR⁵ puissent être engagés dans un même cycle ;
- p est un nombre entier égal à 0, 1 ou 2, de préférence égal à 0 ou 1.

Le polymère silylé tel que défini ci-dessus comprend au moins un groupement alkoxysilane réticulable. Le groupement alkoxysilane réticulable est de préférence positionné en terminaison dudit polymère. Un positionnement en milieu de chaîne n'est toutefois pas exclu. Le polymère silylé n'est pas réticulé avant l'application de la composition adhésive. La composition adhésive est appliquée dans des conditions permettant sa réticulation.

Le polymère silylé (A) se présente généralement sous forme de liquide plus ou moins visqueux. De préférence, le polymère silylé présente une viscosité allant de 10 à 200 Pa.s, de préférence allant de 20 à 175 Pa.s, ladite viscosité étant par exemple mesurée selon une méthode de type Brookfield à 23°C et 50% d'humidité relative (aiguille S28).

Le polymère silylé (A) comprend de préférence deux groupements de formule (I), mais il peut également comprendre de trois à six groupements de formule (I).

De préférence, le ou les polymères silylés (A) présentent une masse molaire moyenne allant de 500 à 50000 g/mol, de préférence encore allant de 700 à 20000 g/mol. La masse molaire des polymères peut être mesurée par des méthodes bien connues de l'homme du métier, par exemple par RMN et chromatographie d'exclusion stérique en utilisant des étalons de type polystyrène.

Selon un mode de réalisation de l'invention, le polymère silylé (A) répond à l'une des formules (II), (III) ou (IV) : 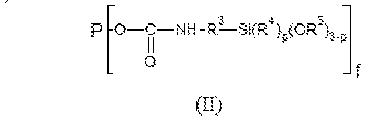 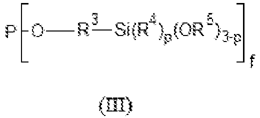 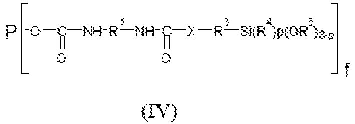 dans lesquelles :
- R⁴, R⁵ et p ont la même signification que dans la formule (I) décrite ci-dessus,
- P représente un radical polymérique saturé ou insaturé, linéaire ou ramifié comprenant éventuellement un ou plusieurs hétéroatomes, tels que oxygène, azote, soufre, silicium, et présentant de préférence une masse molaire en nombre allant de 100 g/mol à 48600 g/mol, plus particulièrement de 300 g/mol à 18600 g/mol ou encore de 500 g/mol à 12600 g/mol,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone, de préférence de 1 à 3 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes,
- f est un entier allant de 1 à 6, de préférence allant de 2 à 5, de préférence de 2 à 4, de préférence encore allant de 2 à 3.

De préférence, dans les formules (II), (III) et/ou (IV) ci-dessus, P représente un radical polymérique choisi de manière non limitative parmi les polyéthers, polycarbonates, polyesters, polyoléfines, polyacrylates, polyéther polyuréthanes, polyester polyuréthanes, polyoléfine polyuréthanes, polyacrylate polyuréthanes, polycarbonate polyuréthanes, polyéther/polyester polyuréthanes à blocs.

Par exemple, le document EP 2468783 décrit des polymères silylés de formule (II) dans lesquels P représente un radical polymérique à blocs polyuréthane/polyester/polyéther.

Selon un mode de réalisation, les polymères silylés sont choisis parmi les polyuréthanes silylés, les polyéthers silylés, et leurs mélanges.

Selon un mode de réalisation particulier, le polymère silylé répond à l'une des formules (II'), (III') ou (IV') :

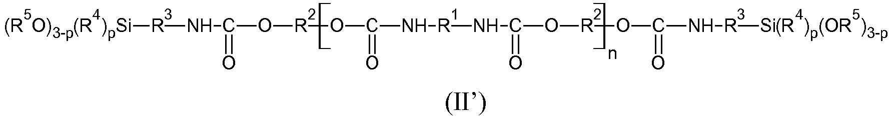

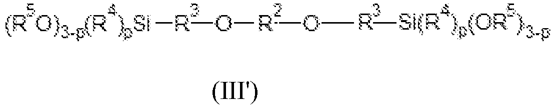

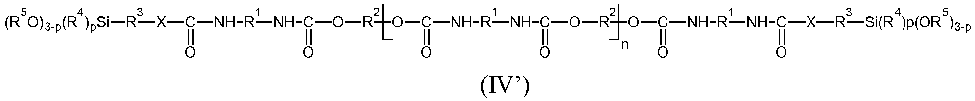

Dans les formules (II'), (III') et (IV') :
- R¹, R³, R⁴, R⁵, X, R⁷ et p ont la même signification que dans les formules (II), (III) et (IV) décrites ci-dessus,
- R² représente un radical divalent hydrocarboné saturé ou insaturé, linéaire ou ramifié comprenant éventuellement un ou plusieurs hétéroatomes, tels que oxygène, azote, soufre, silicium, et présentant de préférence une masse molaire en nombre allant de 100 g/mol à 48600 g/mol, plus particulièrement de 300 g/mol à 18600 g/mol ou encore de 500 g/mol à 12600 g/mol,
- n est un entier supérieur ou égal à 0.

Dans les polymères silylés de formules (II'), (III') ou (IV') définies ci-dessus, lorsque le radical R² comprend un ou des hétéroatomes, ledit ou lesdits hétéroatomes ne sont pas présents en bout de chaîne. Autrement dit, les valences libres du radical divalent R² liées aux atomes d'oxygène voisin du polymère silylé, proviennent chacune d'un atome de carbone. Ainsi, la chaine principale du radical R² est terminée par un atome de carbone à chacune des deux extrémités, ledit atome de carbone présentant alors une valence libre.

Selon un mode de réalisation, les polymères silylés (A) sont obtenus à partir de polyols choisis parmi les polyéthers polyols, les polyesters polyols, les polycarbonates polyols, les polyacrylates polyols, les polysiloxanes polyols et les polyoléfines polyols et leurs mélanges, et de préférence encore à partir de diols choisis parmi les polyéthers diols, les polyesters diols, les polycarbonates diols, les polyacrylates diols, les polysiloxanes diols, les polyoléfines diols et leurs mélanges. Dans le cas des polymères de formules (II'), (III') ou (IV') décrites ci-dessus, de tels diols peuvent être représentés par la formule HO-R²-OH où R² a la même signification que dans les formules (II'), (III') ou (IV').

Par exemple, parmi les radicaux de type R² qui peuvent être présents dans les formules (II'), (III') ou (IV'), on peut citer les radicaux divalents suivants dont les formules ci-dessous font apparaître les 2 valences libres :
- dérivé d'un polypropylène glycol : 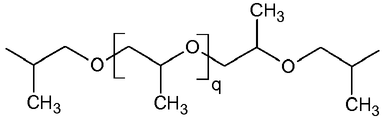
- dérivé d'un polyester diol : 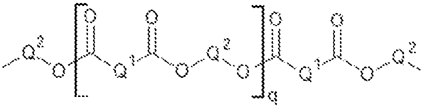
- dérivé d'un polybutadiène diol : 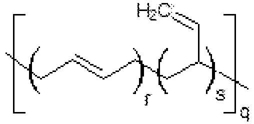
- dérivé d'un polyacrylate diol : 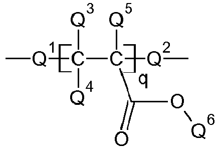
- dérivé d'un polysiloxane diol : 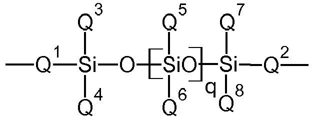
dans lesquelles :
q représente un entier tel que la masse moléculaire en nombre du radical R² va de 100 g/mol à 48600 g/mol, de préférence de 300 g/mol à 18600 g/mol, de préférence encore de 500 g/mol à 12600 g/mol,
r et s représentent zéro ou un entier non nul tel que la masse moléculaire en nombre du radical R² va de 100 g/mol à 48600 g/mol, de préférence de 300 g/mol à 18600 g/mol, de préférence encore de 500 g/mol à 12600 g/mol, étant entendu que la somme r+s est différente de zéro,
Q¹ représente un radical alkylène divalent aromatique ou aliphatique linéaire ou ramifié, saturé ou insaturé, présentant de préférence de 1 à 18 atomes de carbone, de préférence encore de 1 à 8 atomes de carbone,
Q² représente un radical alkylène divalent linéaire ou ramifié présentant de préférence de 2 à 36 atomes de carbone, de préférence encore de 1 à 8 atomes de carbone,
Q³, Q⁴, Q⁵, Q⁶, Q⁷ et Q⁸, représentent, indépendamment les uns des autres, un atome d'hydrogène ou un radical alkyle, alkényle ou aromatique, présentant de préférence de 1 à 12 atomes de carbone, de préférence de 2 à 12 atomes de carbone, de préférence encore de 2 à 8 atomes de carbone.

Selon un mode de réalisation, R¹ est choisi parmi l'un des radicaux divalents suivants dont les formules ci-dessous font apparaître les 2 valences libres :
a) le radical divalent dérivé de l'isophorone diisocyanate (IPDI) : 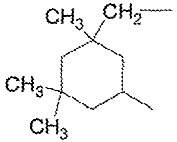
b) le radical divalent dérivé du dicyclohexylmethane diisocyanate (H12MDI) 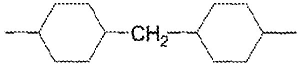
c) le radical divalent dérivé du toluène diisocyanate (TDI) 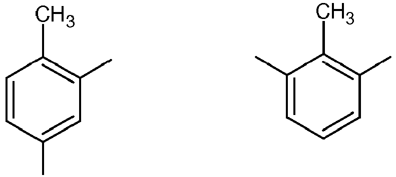
d) les radicaux divalents dérivés des isomères 4,4' et 2,4'- du diphénylmethane diisocyanate (MDI) 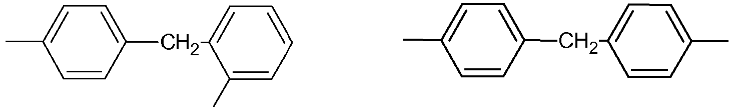
e) le radical divalent dérivé de l'hexaméthylène diisocyanate (HDI) -(CH₂)₆-
f) le radical divalent dérivé du m-xylylène diisocyanate (m-XDI)

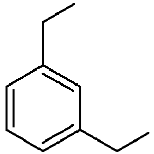

Les polymères de formule (II) ou (II') peuvent être obtenus selon un procédé décrit dans les documents EP 2336208 et WO 2009/106699. L'homme du métier saura adapter le procédé de fabrication décrit dans ces deux documents dans le cas de l'utilisation de différents types de polyols. Parmi les polymères répondant à la formule (II), on peut citer :
- GENIOSIL^{®} STP-E10 (disponible auprès de WACKER) : polyéther comprenant deux groupements (I) de type diméthoxy (n égal à 0, p égal à 1 et R⁴ et R⁵ représentent un groupement méthyle) présentant une masse molaire moyenne en nombre de 8889 g/mol où R³ représente un groupement méthyle;
- GENIOSIL^{®} STP-E30 (disponible auprès de WACKER) : polyéther comprenant deux groupements (I) de type diméthoxy (n égal à 0, p égal à 1 et R⁴ et R⁵ représentent un groupement méthyle) présentant une masse molaire moyenne en nombre de 14493 g/mol où R³ représente un groupement méthyle;
- SPUR+^{®} 1050MM (disponible auprès de MOMENTIVE) : polyuréthane comprenant deux groupements (I) de type triméthoxy (n différent de 0, p égal à 0 et R⁵ représente un groupement méthyle) présentant une masse molaire moyenne en nombre de 16393 g/mol où R³ représente un groupement n-propyle ;
- SPUR+^{®} Y-19116 (disponible auprès de MOMENTIVE) : polyuréthane comprenant deux groupements (I) de type triméthoxy (n différent de 0 et R⁵ représente un groupement méthyle) présentant une masse molaire moyenne en nombre allant de 15000 à 17000 g/mol g/mol où R³ représente un groupement n-propyle ;
- DESMOSEAL^{®} S XP 2636 (disponible auprès de BAYER) : polyuréthane comprenant deux groupements (I) de type triméthoxy (n différent de 0, p égal à 0 et R⁵ représente un groupement méthyle) présentant une masse molaire moyenne en nombre de 15038 g/mol où R³ représente un groupement n-propylène.

Les polymères de formule (III) ou (III') peuvent être obtenus par hydrosilylation de polyéther diallyléther selon un procédé décrit par exemple dans le document EP 1829928. Parmi les polymères répondant à la formule (III), on peut citer :
- le polymère MS SAX^{®} 350 (disponible auprès de KANEKA) correspondant à un polyéther comprenant deux groupements (I) de type diméthoxy (p égal à 1 et R⁴ et R⁵ représentent un groupement méthyle) ayant une masse molaire moyenne en nombre allant de 14000 à 16000 g/mole ;
- le polymère MS SAX^{®} 260 (disponible auprès de KANEKA) correspondant à un polyéther comprenant deux groupements (I) de type diméthoxy (p égal à 1, R⁴ et R⁵ représentent un groupement méthyle) présentant une masse molaire moyenne en nombre de 16000 à 18000 g/mol où R³ représente un groupement éthyle ;
- le polymère MS S303H (disponible auprès de KANEKA) correspondant à un polyéther comprenant deux groupements (I) de type diméthoxy (p est égal à 1 et R⁴ représente un groupement méthyle) ayant une masse moléculaire moyenne en nombre d'environ 22 000 Dalton.

Les polymères de formule (IV) ou (IV') peuvent par exemple être obtenus par réaction de polyol(s) avec un ou des diisocyanate(s) suivie d'une réaction avec des aminosilanes ou des mercaptosilanes. Un procédé de préparation de polymères de formule (IV) ou (IV') est décrit dans le document EP 2 583 988. L'homme du métier saura adapter le procédé de fabrication décrit dans ce document dans le cas de l'utilisation de différents types de polyols.

Selon un mode de réalisation préféré de l'invention, la composition adhésive comprend au moins un polymère silylé de formule (II) et/ou (II') ou au moins un polymère silylé de formule (III) et/ou (III').

Selon un mode de réalisation tout particulièrement préféré de l'invention, la composition adhésive comprend au moins un polymère silylé de formule (III'), notamment dans laquelle R² est un radical divalent dérivé d'un polyéther, de préférence d'un poly(oxyalkylène) diol, et encore plus particulièrement d'un polypropylène glycol. Le temps de réticulation de ladite composition adhésive est alors abaissé de manière tout à fait avantageuse.

Le ou les polymères silylés (A) peuvent représenter au moins 5% en poids, de préférence au moins 10% en poids, de préférence encore au moins 15% en poids, du poids total de la composition adhésive. Généralement, la teneur en polymère(s) silylé(s) dans la composition adhésive est de préférence inférieure ou égale à 90% en poids, de préférence encore inférieure ou égale à 80% en poids, encore plus préférentiellement inférieure ou égale à 70% en poids, avantageusement inférieur ou égal à 60% en poids, par rapport au poids total de la composition adhésive.

La quantité de polymères silylés (A) dans la composition adhésive peut dépendre de l'utilisation de ladite composition adhésive. En effet, pour une composition de mastic, la composition adhésive comprendra de préférence de 5 à 50% en poids de polymères silylés, de préférence de 10 à 40% en poids de polymères silylés, par rapport au poids total de la composition adhésive. Pour une composition adhésive utilisée pour la formulation d'articles auto-adhésif sensibles à la pression (de type PSA), la composition adhésive comprendra de préférence de 10 à 99,9% en poids, de préférence de 15 à 90% en poids, de préférence encore de 20 à 80% en poids, de polymères silylés, par rapport au poids total de la composition adhésive.

### Composition catalytique (B)

La composition catalytique (B) est destinée à la réticulation du polymère silylé (A) qui est compris dans la composition adhésive. La composition catalytique (B), telle que définie dans la présente invention, est stable, en particulier lors du stockage de la composition adhésive.

Lors du stockage de la composition adhésive, le polymère (A) est sous forme réticulable (non-réticulée). La réticulation du polymère silylé (A) s'effectue lors de l'application de la composition adhésive sur une surface, en présence de l'humidité de l'air, pour assurer un collage ou encore pour former un revêtement ou une étanchéité. La stabilité de la composition catalytique (B) correspond avantageusement à un maintien du temps de réticulation de la composition adhésive, après le stockage de celle-ci.

La composition catalytique (B) comprend :
- une amine tertiaire (C) de pKa supérieur à 11 ; et
- un composé organométallique (D) obtenu par réaction d'au moins un alkoxyde métallique (D1) avec au moins une oxime (D2) choisie parmi une oxime de formules (V) ou (VI) telles que définies précédemment.

L'amine tertiaire (C) est avantageusement une base forte dont le pKa est supérieur à 11.

Selon un mode de réalisation, la composition catalytique (B) comprend, comme amine tertiaire (C), un phosphazene (C1) de formule (VII) : 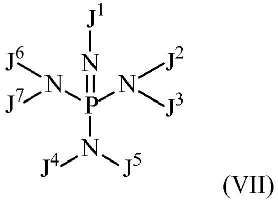 dans laquelle :
- J¹ représente un radical alkyle linéaire ou ramifié comprenant de 1 à 6 atomes de carbone,
- J² et J³ représentent, indépendamment l'un de l'autre, un radical alkyle comprenant de 1 à 4 atomes de carbone ou bien forment ensemble, avec l'atome d'azote auquel ils sont reliés, un hétérocycle aliphatique comprenant de 4 à 6 atomes de carbone ;
- J⁴ et J⁵ représentent, indépendamment l'un de l'autre, un radical alkyle comprenant de 1 à 4 atomes de carbone ou bien forment ensemble, avec l'atome d'azote auquel ils sont reliés, un hétérocycle aliphatique comprenant de 3 à 4 atomes de carbone ;
- J⁶ et J⁷ représentent, indépendamment l'un de l'autre, un radical alkyle comprenant de 1 à 4 atomes de carbone ou bien forment ensemble, avec l'atome d'azote auquel ils sont reliés, un hétérocycle aliphatique comprenant de 4 à 6 atomes de carbone ;
étant entendu en outre que J⁴ (ou J⁵) peut former avec au moins un des groupements J⁶ (ou J⁷) et/ou J² (ou J³), ainsi qu'avec les 2 atomes de d'azote et l'atome de phosphore auxquels il sont reliés, un cycle aliphatique comprenant 3 à 4 atomes de carbone.

Les phosphazènes (C1) de formule (VII) sont préparés selon des méthodes connues de l'homme du métier et certains sont également disponibles dans le commerce. On peut ainsi citer :
- le catalyseur de formule ci-dessous : 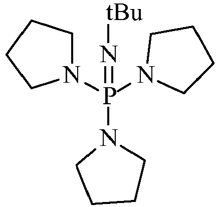 qui est disponible auprès de SIGMA ALDRICH sous la dénomination phosphazene base Pl-tert-butyl- tris(tetramethylene) (également dénommé P1).
- le catalyseur de formule ci-dessous : 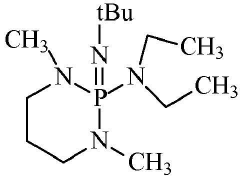
qui est disponible auprès de SIGMA ALDRICH sous la dénomination 2-*tert-*Butylimino-2-diethylamino-1,3-dimethylperhydro-1,3,2-diazaphosphorine (également dénommé BEMP).

Selon un autre mode de réalisation, la composition catalytique (B) comprend, comme amine tertiaire (C), une guanidine ou une amidine de pKa supérieur à 11, qui est préférentiellement choisie parmi les composés suivants :
- le 1,8-diazabicyclo[5.4.0]undec-7-ene (ou DBU), de pKa égal à 12,5 et de formule : 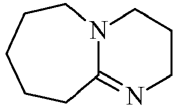
- le 1,5,7-Triazabicyclo[4.4.0]dec-5-ene (ou TBD), de pKa égal à 13,7 et de formule : 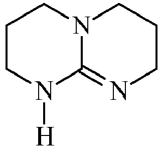 ou encore
- le 1,5-Diazabicyclo[4.3.0]non-5-ène (ou DBN), de pKa égal à environ 12 et de formule :

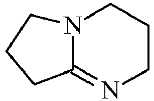

Ces composés sont également disponibles au plan commercial, par exemple auprès de la société SAFIC ALCAN pour le DBU, auprès de la société SIGMA ALDRICH pour le TBD et pour le DBN.

La composition catalytique (B) comprend un composé organométallique (D) qui est obtenu par réaction d'un alkoxyde métallique (D1) avec une oxime (D2) de formule (V) ou (VI).

L'alkoxyde métallique (D1) se présente sous la formule (VIII) :

M(OR)_{y} (VIII)

dans laquelle :
- M représente un atome de métal choisi parmi le titane, le zirconium, l'aluminium, le zinc, le bismuth, le silicium, le hafnium, le barium, le cerium, le cesium, le rubidium ou l'antimoine,
- y est égal à 1, 2, 3 ou 4 selon la valence de l'atome de métal M, et
- R représente un groupement alkyle, alkényle, carbonyl-alkyle, ou carbonyl-alkényle, ledit radical alkyle ou alkényle comprenant de 1 à 22 atomes de carbone, de préférence de 1 à 15 atomes de carbone.

Ainsi, au sens de la présente invention, un alkoxyde métallique recouvre également les alkanoates métalliques pour lesquels le radical R ci-dessus est un carbonyl-alkyle ou carbonyl-alkényle.

Il semble que la réaction entre l'alkoxyde métallique (D1) et l'oxime (D2) puisse être représentée par l'équation schématique suivante :

M(OR)_{y} + x R'R"C=NOH → M(OR)_{y-x}(ON=CR'R")ₓ + x ROH

dans laquelle :
- M(OR)_{y} répond à la formule (VIII) telle que définie précédemment,
- R'R"C=NOH représente l'oxime,
- x est un nombre entier, choisi parmi 1, 2, 3 ou 4, allant de 1 à la valence du métal M correspondant.

Sans vouloir être lié par une quelconque théorie, les inventeurs ont donc découvert que la combinaison de l'amine tertiaire (C) avec un composé organométallique comprenant au moins une liaison de type « M-O-N » où M représente un atome de métal, O représente un atome d'oxygène et N représente un atome d'azote, présente des propriétés catalytiques encore améliorées, par rapport audit composé organométallique seul, dans une composition comprenant des polymères silylés réticulables. Ces propriétés catalytiques améliorées ont notamment pour effet d'abaisser encore le temps de réticulation par rapport à la demande WO 2017/216446.

De préférence, l'alkoxyde métallique se présente sous la formule (VIII) dans laquelle:
- M représente un atome de métal choisi parmi le titane, le bismuth, le zinc, le rubidium ou le césium ; et
- R représente un groupement alkyle ou alkényle, de préférence alkyle, linéaire ou ramifié ayant de 1 à 5 atomes de carbone, de préférence de 2 à 4 atomes de carbone, de préférence de 3 à 4 atomes de carbone ; ou bien
- R représente un groupement carbonyl-alkyle dont le radical alkyle comprend de 1 à 14 atomes de carbone.

Selon un mode de réalisation avantageux de l'invention, l'alkoxyde métallique est choisi parmi les alkoxydes de titane ou les alkanoates de bismuth, zinc, rubidium ou cesium.

Un alkoxyde de titane est plus particulièrement préféré, et tout particulièrement le composé : Ti(OnBu)₄. où "nBu" représente le groupement n-butyle (-CH₂-CH₂-CH₂-CH₃).

Parmi les alkanoates de bismuth, zinc, rubidium ou cesium, sont particulièrement préférés les composés : Bi[O(C=O)C₉H₁₉]₂ ; Zn[O(C=O)C₉H₁₉]₂ ; Rb[O(C=O)C₉H₁₉] ; Cs[O(C=O)C₉H₁₉] .

Les alkoxydes métalliques de formule (VIII) sont des produits disponibles au plan commercial. Ainsi :
- le Ti(OnBu)₄ est disponible auprès de SIGMA ALDRICH ou DORF KETAL sous la dénomination commerciale TYZOR^{®} TnBT ;
- le Zn[O(C=O)C₉H₁₉]₂ est disponible auprès de la société BORCHERS sous la dénomination commerciale BORCHI^{®} KAT 15 ;
- le Bi[O(C=O)C₉H₁₉]₂ est disponible auprès de la société BORCHERS sous la dénomination commerciale BORCHI^{®} KAT 315 ;
- le Rb[O(C=O)C₉H₁₉] est disponible auprès de la société TIB CHEMICALS sous la dénomination commerciale TIB KAT^{®} VP16-626 ;
- le Cs[O(C=O)C₉H₁₉] est disponible auprès de la société TIB CHEMICALS sous la dénomination commerciale TIB KAT^{®} VP15-796.

La composition catalytique (B) comprend un composé organométallique (D) qui est obtenu par réaction de l'alkoxyde métallique (D1) avec une oxime (D2) de formule (V) ou (VI).

Selon un mode de réalisation de l'invention, dans la formule (V) de l'oxime (D2), G¹ représente de préférence un groupement méthyle ou un groupement éthyle, de préférence encore un groupement méthyle.

Selon un mode de réalisation de l'invention, dans la formule (V), G² représente de préférence l'hydrogène ou un groupement alkyle linéaire ou ramifié comprenant de 1 à 8 atomes de carbone, de préférence de 1 à 6 atomes de carbone, de préférence encore de 1 à 4 atomes de carbone, ou un groupement phényle, ou un groupement -N(G⁷G⁸) où G⁷ et G⁸ représentent de préférence un groupement méthyle, éthyle, propyle, butyle, pentyle ou benzyle (-CH₂-C₆H₅), de préférence encore un groupement méthyle, éthyle, propyle ou benzyle.

L'oxime de formule (VI) peut être monocyclique ou polycyclique, de préférence monocyclique.

Par exemple, dans le cas d'une oxime de formule (VI) polycyclique, lorsque G³ forme un cycle avec G⁵ ou G⁶ et lorsque G⁴ forme un cycle avec G⁵ ou G⁶ et lorsque G³ et G⁴ (et G⁵ et G⁶) sont engagés dans un même cycle alors l'oxime présente une structure tricyclique, par exemple de type adamantane ou norbornène.

Selon un mode de réalisation de l'invention, dans la formule (VI),
- G³ et G⁶ représentent chacun un atome d'hydrogène, et/ou
- G⁴ et G⁵ forment un cycle aliphatique, de préférence saturé, présentant de 4 à 14 atomes de carbone, de préférence de 5 à 12 atomes de carbone, de préférence encore 6 atomes de carbone, ledit cycle étant éventuellement substitué par un ou plusieurs groupements méthyle, éthyle et/ou propyle et ledit cycle comprenant éventuellement un ou plusieurs hétéroatomes choisies parmi un atome d'oxygène, un atome de soufre ou un atome d'azote, ledit atome d'azote n'étant alors pas lié à un atome d'hydrogène.

A titre d'exemple d'oximes de formule (VI), on peut citer la cyclohexanone oxime et la cyclododecanone oxime. Ces 2 composés sont largement disponibles au plan commercial. Ainsi la cyclohexanone oxime peut être obtenue auprès de la société OMG BORCHERS sour la dénomination commerciale BORCHI^{®} NOX C3.

Selon un mode de réalisation particulier de l'invention, le composé organométallique (D) est obtenu par réaction :
- d'un alkoxyde (D1) choisi parmi les composés suivants : Ti(OnBu)₄, Zn[O(C=O)C₉H₁₉], Bi[O(C=O)C₉H₁₉]₂ ;
- et d'une oxime (D2) choisie parmi les oximes de formule (VI-1) : 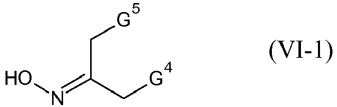 dans laquelle :
   - G⁴ et G⁵ forment un cycle aliphatique saturé présentant de 5 à 11 atomes de carbone. Selon un mode de réalisation particulier de l'invention, le composé organométallique (D) est choisi parmi les composés suivants :
   - produit de la réaction entre un alkoxyde de formule Ti(OnBu)₄ et la cyclohexanone oxime ;
   - produit de la réaction entre un alkoxyde de formule Zn[O(C=O)C₉H₁₉]₂ et la cyclohexanone oxime ;
   - produit de la réaction entre un alkoxyde de formule Bi[O(C=O)C₉H₁₉]₂ et la cyclohexanone oxime ;
   - produit de la réaction entre un alkoxyde de formule Rb[O(C=O)C₉H₁₉] et la cyclohexanone oxime ;
   - produit de la réaction entre un alkoxyde de formule Cs[O(C=O)C₉H₁₉] et la cyclohexanone oxime.

Selon un mode de réalisation de l'invention, le composé organométallique (D) est obtenu par réaction de l'alkoxyde métallique (D1) avec l'oxime (D2) selon un ratio molaire alkoxyde:oxime allant de 1:1 à 1:6, de préférence allant de 1:1 à 1:4. Ce mode de réalisation est particulièrement préféré dans le cas où le métal de l'alkoxyde métallique est tétravalent. Dans le cas où le métal de l'alkoxyde métallique est trivalent, le ratio molaire alkoxyde:oxime va de préférence de 1:1 à 1:3. Ce même ratio molaire va de préférence de 1:1 à 1:2, dans le cas d'un métal divalent, et sera d'environ 1:1 dans le cas d'un métal monovalent.

La composition catalytique (B) comprend l'amine tertiaire (C) et le composé organométallique (D) dans une quantité respective correspondant à un rapport : nombre de moles de (C) / nombre de moles de l'alkoxyde métallique (D1) compris dans le domaine allant de 0,5 à 25, de préférence de 1 à 5.

Selon un mode de réalisation, la composition catalytique (B) est constituée essentiellement de l'amine tertiaire (C) et du composé organométallique (D).

Selon un autre mode de réalisation, la composition catalytique (B) comprend, outre l'amine tertiaire (C) et le composé organométallique (D), un composé organique de silicium (E) choisi parmi :
- un silsesquioxane (E1) ;
- un composé (E2) de formule (IX) :

   K[-Si(OR⁶)₃]ᵥ (IX)

   dans laquelle :
   - K est un radical hydrocarboné, saturé ou insaturé, linéaire ou ramifié, comprenant de 2 à 15 atomes de carbone et un ou plusieurs hétéroatomes choisis parmi l'azote et l'oxygène ;
   - R⁶ représente un groupement alkyle ou alkényle, de préférence alkyle, linéaire ou ramifié ayant de 1 à 5 atomes de carbone, de préférence de 1 à 2 atomes de carbone
   - v égale 1, 2 ou 3 ; et
- un oligomère de tetraéthylorthosilicate (E3).

Ce mode de réalisation est particulièrement avantageux, car il permet l'obtention de propriétés mécaniques améliorées pour le joint adhésif qui est formé par la réticulation de la composition adhésive.

Selon une variante encore plus préférée de ce dernier mode de réalisation, l'amine tertiaire (C) est choisie parmi une amidine ou une guanidine, et le composé organométallique (D) est obtenu à partir d'un alkoxyde de titane, de préférence à partir de Ti(OnBu)₄. Le joint adhésif formé par la réticulation de la composition adhésive est avantageusement cohésif.

Les silsesquioxanes sont typiquement des composés organiques de silicium pouvant adopter une structure polyhédrique ou une structure polymérique, avec des liaisons Si-O-Si. Ils ont typiquement la structure générale suivante :

[RSiO_{3/2}]t

dans laquelle R, de nature identique ou différente, représente un radical organique, et t est un nombre entier pouvant varier de 6 à 12, de préférence t égale 6, 8, 10 ou 12.

Selon un mode de réalisation, le silsesquioxane (A) a une structure polyhédrique (ou POSS pour « Polyhedral Oligomeric Silsesquioxane » en anglais).

De préférence, le silsesquioxane (A) répond à la formule générale (X) suivante : 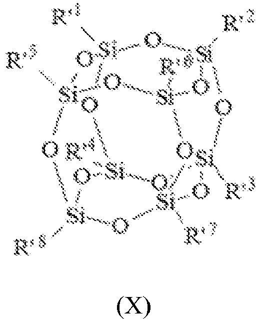 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical aliphatique cyclique en C3-C8, et d'un radical acyle en C1-C4 ;
à condition :
- qu'au moins un radical parmi les radicaux R'¹ à R'⁸ soit un radical alcoxy en C1-C4; et
- qu'au moins un radical parmi les radicaux R'¹ à R'⁸ soit un radical phényle.

Les silsesquioxanes sont des composés connus qui sont décrits notamment dans la demande WO 2008/107331. Certains sont également disponibles au plan commercial, ainsi le produit de DOW commercialisé sous la dénomination : DOW CORNING^{®} 3074 et DOW CORNING^{®} 3037 (numéro CAS = 68957-04-0).

Le composé (E2) de formule (IX) est avantageusement choisi parmi :
- le Tris-[3-(trimethoxysilyl)propyl] isocyanurate (numéro CAS = 26115-70-8), de formule : 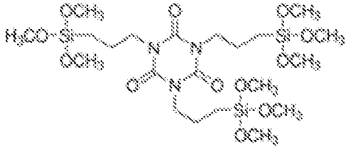 qui est commercialisé par WACKER sous la dénomination GENIOSIL^{®} GF 69 ;
- la Bis(trimethoxysilylpropyl)amine) (numéro CAS = 82985-35-1), de formule : 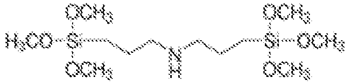 qui est commercialisée par EVONIK sous la dénomination DYNASYLAN^{®} 1124 ; et
- la Tris(triethoxysilylpropyl)amine (numéro CAS = 18784-74-2), de formule : 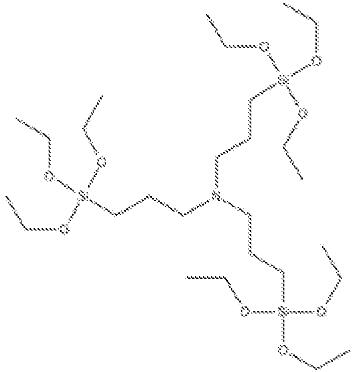 qui est commercialisée par GELEST sous le code SIT8716.3.

L'oligomère de TetraEthylOrthoSilicate (E3) est nommé également oligomère de TEOS et répond à la formule : 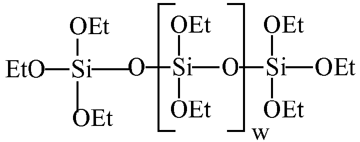 dans laquelle est w est un entier compris entre 1 et 10.

Un tel oligomère est commercialisé par WACKER sous la dénomination WACKER^{®} TES 40 WN.

Lorsque la composition catalytique (B) comprend, outre l'amine tertiaire (C) et le composé organométallique (D), le composé organique de silicium (E), ce dernier est avantageusement présent dans une quantité correspondant à un rapport : nombre de moles de (E) / nombre de moles de l'alkoxyde métallique (D1), qui est compris dans le domaine allant de 0,1 à 5, et de préférence de 0,3 à 1.

Selon une variante préférée, la composition catalytique (B) comprend également un solvant (S). Cette variante est notamment préférée lorsque l'oxime (D2) est un composé solide à température ambiante.

On entend par "solvant", au sens de la présente invention, un composé ou une composition qui est liquide à température ambiante et qui est capable de mettre en solution des substances solides ou liquides par un mécanisme de nature physique, sans réagir chimiquement avec lesdites substances. Ainsi le terme "solvant" inclut également une substance qui est désignée habituellement par le terme de "plastifiant", à condition que ladite substance soit capable de solubiliser les ingrédients présents dans la composition catalytique (B) sans réagir chimiquement avec eux.

Parmi les solvants possibles, on peut citer un solvant polaire tel que le tétrahydrofurane (THF), l'acétate d'éthyle, la méthyléthylcétone ou le xylène.

Parmi les plastifiants, on peut citer :
- le tétravalérate de pentaérythritol qui est commercialisé sous la marque PEVALEN^{™} par la société PERSTORP ;
- un alkylsulfonate (C10-C18) de phénol (numéro CAS = 70775-94-9) comme celui vendu sous la dénomination de MESAMOLL^{®} par la société LANXESS ;
- le diisononyl-1,2-cyclohexanedicarboxylate qui est commercialisé sous la dénomination HEXAMOLL DINCH^{®} par la société BASF ;
- les esters de l'acide benzoïque, de l'acide phtalique, de l'acide trimellitique, de l'acide pyromellitique, de l'acide adipique, de l'acide sébacique, de l'acide fumarique, de l'acide maléique, de l'acide itaconique ou de l'acide citrique ;
- les dérivés de polyester, de polyéther, de l'huile minérale d'hydrocarbures.

Parmi les dérivés de l'acide phtalique, on peut notamment citer les phtalates, tels que le phtalate de dibutyle, le phtalate de dioctyle, le phtalate de dicyclohexyle, le phtalate de diisooctyle, le phtalate de diisodécyle, le phtalate de dibenzyle ou le phtalate de butylbenzyle.

La quantité de solvant à introduire dans la composition catalytique (B) est aisément déterminée par l'homme du métier, de manière à solubiliser l'alkoxyde (D1) et l'oxime (D2), cette quantité étant aussi généralement suffisante pour solubiliser l'amine tertiaire (C) et le composé organique de silicium (E), lorsque ce dernier est présent. En général, une quantité de solvant correspondant à un rapport : nombre de moles de (S) / nombre de moles de l'alkoxyde métallique (D1) compris dans le domaine allant jusqu'à 6 est appropriée.

Selon un mode de réalisation, la composition catalytique (B) est constituée essentiellement de l'amine tertiaire (C), du composé organométallique (D) et du solvant (S).

Selon un autre mode de réalisation, la composition catalytique (B) est constituée essentiellement de l'amine tertiaire (C), du composé organométallique (D), du composé organique de silicium (E) et du solvant (S).

La composition catalytique (B) peut représenter au moins 0,05% en poids, de préférence de 0,1 à 10% en poids, de préférence de 0,5 à 5% en poids, et encore plus préférentiellement de 0,5 à 2 % du poids total de la composition adhésive.

La composition catalytique (B) est préparée au moyen d'un procédé qui comprend les étapes :
(i) de mélange de l'alkoxyde métallique (D1) avec l'oxime (D2) pour former le composé organométallique (D), de préférence en présence du solvant (S), puis
(ii) le cas échéant, d'introduction, dans le mélange obtenu à l'étape (i), du composé organique de silicium (E), puis
(iii) l'introduction dans le mélange obtenu à l'étape (i) ou (ii) de l'amine tertiaire (C).

De préférence, les étapes (i), (ii) et (iii) sont mises en œuvre à température ambiante (environ 23°C) et à pression atmosphérique (environ 1 bar).

Lorsque la composition catalytique (B) comprend le composé organique de silicium (E), l'étape (ii) est alors nécessaire et, de préférence, est mise en œuvre dans l'ordre indiquée ci-dessus, la permutation des étapes (ii) et (iii) étant toutefois également possible.

### Autres additifs (F)

La composition adhésive selon l'invention peut comprendre d'autres(s) additif(s) (F).

Par « autres additifs », on entend des additifs qui ne sont ni des polymères silylés (A) ni des composés inclus dans la composition catalytique (B) tels que définis ci-dessus.

Parmi les autres additifs, on peut citer des charges, des agents rhéologiques, des plastifiants, des absorbeurs d'humidité, des stabilisants U.V., des promoteurs d'adhésion.

La composition adhésive selon l'invention peut comprendre des charges, lesdites charges pouvant être des charges inorganiques, des charges organiques ou un mélange de charges inorganiques et organiques.

Les charges inorganiques peuvent être choisies parmi les carbonates de calcium, les polycarbonates de calcium, l'hydroxyde d'aluminium, les talcs, les kaolins, le noir de carbone, les silices et fumée de silice, le quartz, les billes de verre.

Les charges organiques peuvent être choisies parmi le polychlorure de vinyle, le polyéthylène, le polyamide, des résines de styrène-butadiène, ou tout autre polymère organique sous forme de poudre.

De préférence, les charges présentent une granulométrie allant de 0,010 à 20 µm, de préférence allant de 0,020 à 15 µm, de préférence encore allant de 0,030 à 5 µm.

Les charges présentes dans la composition adhésive peuvent assurer différentes fonctions au sein de la composition, par exemple une fonction d'agent rhéologique.

Les charges peuvent représenter jusqu'à 80% en poids, de préférence de 20 à 70% en poids, de préférence encore de 30 à 60% en poids, du poids total de la composition adhésive.

Des additifs peuvent être prévus pour ajuster la rhéologie de la composition adhésive selon les contraintes d'application. Par exemple, un additif augmentant le seuil d'écoulement (agent rhéologique) peut être ajouté afin d'éviter les coulures lors de l'application de la composition, en particulier lorsque la surface recevant la couche de composition adhésive n'est pas horizontale.

Le ou les agents rhéologiques peuvent représenter de 0,01 à 8% en poids, de préférence de 0,05 à 6% en poids, de préférence de 0,1 à 5% en poids, du poids total de la composition adhésive.

Le plastifiant inclus comme additif (F) dans la composition adhésive selon l'invention peut être choisi dans la même liste que celle donnée plus haut pour le plastifiant qui est inclus dans la définition du solvant (S) éventuellement compris dans la composition catalytique (B). Le plastifiant inclus comme additif (F) peut être identique audit (ou différent dudit) plastifiant compris dans (B).

Le plastifiant doit être compatible avec le polymère et ne pas démixer dans la composition adhésive. Le plastifiant permet d'augmenter la plasticité (élongation) de la composition et de diminuer sa viscosité.

Lorsqu'un plastifiant est présent dans la composition, sa teneur est de préférence inférieure ou égale à 20% en poids, de préférence inférieure ou égale à 5% en poids, exprimée par rapport au poids total de la composition adhésive. Lorsqu'il est présent, le plastifiant représente de 0,1 à 20% en poids, de préférence de 0,5 à 10 %, et encore plus préférentiellement de 0,5 à 5% en poids, sur la base du poids total de la composition adhésive.

L'absorbeur d'humidité, s'il est présent, peut être choisi parmi le vinyltriméthoxysilane (VTMO) tel que le SILQUEST^{®} A171 disponible auprès de la Société MOMENTIVE, le vinyltriéthoxysilane (VTEO) tel que le GENIOSIL^{®} GF 56 disponible auprès de la Société WACKER ou les alkoxyarylsilanes tel que le GENIOSIL^{®} XL 70 disponible auprès de la Société WACKER.

L'absorbeur d'humidité permet, en plus de la neutralisation de l'eau éventuellement présente dans la composition adhésive, via par exemple les additifs, d'augmenter légèrement la vitesse de réticulation de la composition adhésive lorsque celle-ci serait trop rapide selon les applications visées.

Lorsqu'un absorbeur d'humidité est présent dans la composition, sa teneur est de préférence inférieure ou égale à 4% en poids, de préférence encore inférieure ou égale à 3% en poids, exprimée par rapport au poids total de la composition adhésive. Lorsqu'il est présent, l'absorbeur d'humidité est présent à hauteur de 0,5 à 5% en poids et de préférence de 1 à 3% en poids du poids total de la composition adhésive. S'il est présent en trop grande quantité, l'absorbeur d'humidité peut provoquer l'augmentation du temps de réticulation de la composition adhésive.

Des stabilisants U.V et thermiques peuvent être ajoutés afin de prévenir (ralentir ou empêcher) une dégradation du polymère pour une meilleure tenue aux U.V ou aux chocs thermiques. On citera à titre d'exemples, le TINUVIN^{®} 123, le TINUVIN^{®} 326 ou l'IRGANOX^{®} 245 disponibles auprès de la société BASF.

Comme exemple de promoteur d'adhésion, on peut citer les aminosilanes. En particulier, les aminosilanes permettent d'améliorer la réticulation de polymères silylés de formule (II) ou (II') ou (IV) ou (IV').

### Composition adhésive

Selon une variante préférée de l'invention, la composition adhésive comprend à titre de polymères silylés des polymères silylés de formules (III) ou (III'), telles que décrites ci-dessus, et une composition catalytique (B) qui comprend un composé organométallique (D) obtenu par réaction avec la cyclohexanone oxime d'un alkoxyde choisi parmi : Ti(OnBu)₄, Zn[O(C=O)C₉H₁₉]₂, Bi[O(C=O)C₉H₁₉]₂, Rb[O(C=O)C₉H₁₉] et Cs[O(C=O)C₉H₁₉].

Selon un mode de réalisation de l'invention, la composition adhésive comprend:
- de 5 à 90% en poids, de préférence de 10 à 70% en poids, de préférence encore de 15 à 60% en poids, d'au moins un polymère silylé (A),
- de 0,05 à 10% en poids, de préférence de 0,1 à 10% en poids, de préférence encore de 0,1 à 5% en poids, de la composition catalytique (B),
par rapport au poids total de composition adhésive.

Selon un mode de réalisation particulier de l'invention, la composition adhésive comprend, en particulier est constituée :
- de 5 à 90% en poids, de préférence de 10 à 70% en poids, de préférence encore de 15 à 60% en poids, d'au moins un polymère silylé (A),
- de 0,05 à 10% en poids, de préférence de 0,1 à 10% en poids, de préférence encore de 0,1 à 5% en poids, de la composition catalytique (B),
- de 10 à 80% en poids, de préférence de 20 à 70% en poids, de préférence encore de 30 à 60% en poids, d'au moins une charge,
par rapport au poids total de composition adhésive.

Selon un mode de réalisation particulier de l'invention, la composition adhésive comprend, en particulier est constituée :
- de 5 à 90% en poids, de préférence de 10 à 80% en poids, de préférence encore de 15 à 70% en poids, d'au moins un polymère silylé (A),
- de 0,05 à 10% en poids, de préférence de 0,1 à 10% en poids, de préférence encore de 0,1 à 5% en poids, de la composition catalytique (B),
- de 10 à 80% en poids, de préférence de 20 à 70% en poids, de préférence encore de 30 à 60% en poids, d'au moins une charge,
- de 0,05 à 20%, de préférence de 0,1 à 15%, de préférence encore de 0,5 à 10% en poids d'au moins un autre additif choisi parmi les promoteurs d'adhésion, les plastifiants, les absorbeurs d'humidité, les agents rhéologiques et les stabilisants U.V. et thermiques.
par rapport au poids total de composition adhésive.

De préférence, la composition adhésive selon l'invention présente une viscosité allant de 10 à 100 Pa.s, mesurée à 23°C à l'aide d'un rhéomètre classique en prenant un modèle de Bingham.

La composition adhésive selon l'invention est de préférence conditionnée et stockée dans une cartouche étanche à l'abri de l'humidité.

Selon un mode de réalisation, la composition adhésive selon l'invention se présente sous forme bi-composante dans laquelle le polymère silylé (A) et la composition catalytique (B) sont conditionnés dans deux compartiments séparés.

La composition adhésive n'est pas réticulée avant son utilisation, par exemple par application sur un support. La composition adhésive selon l'invention est appliquée dans des conditions permettant sa réticulation. La réticulation de la composition adhésive a pour effet la création, entre les chaines polymériques du polymère silylé décrit ci-dessus et sous l'action de l'humidité atmosphérique, de liaisons de type siloxane qui conduisent à la formation d'un réseau polymérique tri-dimensionnel.

La composition adhésive selon l'invention peut être préparée par mélange du ou des polymères silylés (A) et de la composition catalytique (B) à une température allant de 10°C à 40°C et à une humidité relative allant de 20 à 55% (+/- 5%). Lorsque des charges sont présentes dans la composition adhésive, la composition catalytique (B) est de préférence ajoutée dans une seconde étape, après le mélange du ou des polymères silylés et des charges. Les autres additifs éventuels sont introduits conformément aux usages habituels.

La composition adhésive selon l'invention peut être conditionnée dans un kit comprenant au moins deux compartiments séparés et comprenant la composition adhésive selon l'invention.

Ledit kit peut comprendre de l'eau, étant entendu que dans ce cas l'eau et le ou les polymères silylés sont conditionnés dans deux compartiments séparés.

Ainsi, dans un tel kit, la composition adhésive selon l'invention peut se présenter sous forme bi-composante dans laquelle le polymère silylé (A) et la composition catalytique (B) sont conditionnés dans deux compartiments séparés. Selon ce mode de réalisation, le kit peut en outre comprendre éventuellement de l'eau dans un troisième compartiment.

Selon un autre mode de réalisation, le kit selon la présente invention peut comprendre la composition adhésive sous forme mono-composante dans un compartiment et de l'eau dans le deuxième compartiment. Par exemple, selon ce mode de réalisation, le deuxième compartiment peut comprendre une solution aqueuse de polyol.

Ainsi, lors de l'application de la composition adhésive, les constituants des compartiments du kit selon l'invention sont mélangés afin de permettre la réticulation du ou des polymères silylés.

La présente invention a également pour objet une composition catalytique (B) comprenant :
- une amine tertiaire (C) de pKa supérieur à 11 ; et
- un composé organométallique (D) obtenu par réaction d'au moins un alkoxyde métallique (D1) avec au moins une oxime (D2) choisie parmi une oxime de formule (V) ou une oxime de formule (VI) : 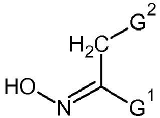 dans lesquelles : 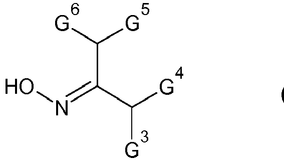
   - G¹ est un atome d'hydrogène ou un radical alkyle linéaire ou ramifié comprenant de 1 à 4 atomes de carbone ;
   - G² est un atome d'hydrogène ou un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle ou un radical -N(G⁷G⁸) où G⁷ et G⁸ représentent, indépendamment l'un de l'autre, un radical alkyle linéaire ou ramifié comprenant de 1 à 10 atomes de carbone ou un radical alkényle linéaire ou ramifié comprenant de 2 à 10 atomes de carbone ou un radical benzyle ;
   - G³ représente soit un atome d'hydrogène, soit un groupement alkyle ayant de 1 à 4 atomes de carbone, soit forme le reste d'un cycle aliphatique ayant entre 4 et 14 atomes de carbone avec les groupements G⁴ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
   - G⁴ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone ;
   étant entendu qu'au moins un des groupements G³ ou G⁴ forme le reste d'un cycle aliphatique avec au moins un des groupements G⁵ ou G⁶ ;
   - G⁵ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
   - G⁶ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁵, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
   - étant entendu qu'au moins un des groupements G⁵ ou G⁶ forme le reste d'un cycle aliphatique avec au moins un des groupements G³ ou G⁴.

La composition catalytique (B) objet de l'invention est telle que définie ci-dessus dans la description de la composition adhésive objet de l'invention, et présente également les différents modes de réalisation qui ont été détaillés dans ladite description.

La présente invention concerne également un procédé de collage comprenant l'application de la composition adhésive selon l'invention sur une surface suivie de la réticulation de ladite composition adhésive.

La réticulation de la composition adhésive est favorisée par l'humidité, en particulier par l'humidité atmosphérique.

La composition adhésive selon l'invention peut être appliquée sur tous types de surface, tels que du béton, des carrelages, du métal, du verre, du bois et des plastiques.

L'invention est à présent décrite dans les exemples de réalisation suivants qui sont donnés à titre purement illustratif, et ne sauraient être interprétés pour en limiter la portée.

### Exemple CD 1 :

### Composition catalytique (B) :

Dans un réacteur en verre de 30 ml, 17,6 mmol de cyclohexanone oxime ont été solubilisées dans 16 mmol de Mesamoll^{®} en agitant pendant 1h30 à température ambiante sous vide.

Ensuite, 17,6 mmol de Ti(OnBu)₄ sont ajoutées à la précédente solution sous azote, et le mélange a été agité pendant 3h à température ambiante sous vide pour fournir une solution jaune pâle composé de complexes titane /oxime.

Enfin, 35,2 mmol de DBU sont introduites dans cette solution. L'ensemble est mélangé pendant 1h pour obtenir une composition catalytique cd1 sous la forme d'une solution orange composée de complexes titane/oxime en équilibre avec la DBU.

### Composition adhésive :

La composition catalytique CD 1 ainsi obtenue est incorporée dans une composition adhésive préparée par simple mélange, dans un mélangeur rapide, des ingrédients suivants :
- 41,8% en poids de MS polymère (MS S303H de Kaneka),
- 53% en poids de charges de type carbonate de calcium précipité
- 2,8% en poids d'un absorbeur d'humidité de type vinyltriméthoxysilane (VTMO)
- 1,4% en poids d'un promoteur d'adhésion de type aminopropyl trimethoxysilane et
- 1% en poids de la composition catalytique CD 1.

La composition adhésive ainsi préparée est soumise aux tests suivants :

### Test de mesure du temps de réticulation

Le temps de réticulation (aussi appelé temps de formation de peau ou « skinning time » en anglais) a été évalué en touchant la surface de la composition adhésive avec une pointe toutes les 5 minutes pendant 2 heure puis toutes les 30 minutes jusqu'à 4 heures (conditions ambiantes : 50% d'humidité relative et température de 23°C). La composition a été considérée comme non réticulée tant que lors du toucher de la surface, des résidus de colle ont été transférés sur la pointe.

Le résultat (exprimé en minutes) est indiqué dans le Tableau 1 ci-dessous.

### Test de stabilité

Une partie de la composition adhésive préparée ci-dessus est conditionnée dans une cartouche qui est stockée dans une étuve à 40°C.

Au bout de 21 jours, la cartouche est retirée de l'étuve et une partie de la composition est versée dans une coupelle en aluminium, en vue de la mesure du temps de réticulation (en minutes) selon le protocole ci-dessus.

Les résultats sont indiqués de la manière suivante :
Un « 2 » indique que la composition adhésive est très stable (temps de réticulation après stockage de 21 jours identique au temps de réticulation mesuré juste après préparation de la composition adhésive),
Un « 1 » indique que la composition adhésive est stable (temps de réticulation après stockage de 21 jours différent mais proche du temps de réticulation mesuré juste après préparation de la composition adhésive),
Un « 0 » indique que la composition adhésive n'est pas stable (temps de réticulation après stockage de 21 jours très différent du temps de réticulation mesuré juste après préparation de la composition adhésive).

Le résultat (exprimé en minutes) est indiqué dans le Tableau 1 ci-dessous.

### Exemples CD 2 - CD 13 et exemple A (comparatif) :

L'exemple CD 1 est répété de la manière détaillée ci-après pour chacun de ces exemples.

Les résultats de temps de réticulation de la composition adhésive correspondante, ainsi que du test de stabilité, sont indiqués dans le Tableau 1 ci-dessous.

### Exemple CD 2 :

L'exemple CD 1 est répété en remplaçant le DBU par le catalyseur de type phosphazène P1.

### Exemple CD 3 :

L'exemple CD 1 est répété en remplaçant le DBU par le catalyseur de type phosphazène BEMP.

### Exemple CD 4 :

L'exemple CD 1 est répété en remplaçant le DBU par le TBD.

### Exemple CD 5:

L'exemple CD 1 est répété en remplaçant les 16 mmol de Mesamoll^{®} par 47 mmol de xylène.

### Exemple CD 6:

L'exemple CD 1 est répété en remplaçant les 16 mmol de Mesamoll^{®} par 10,6 mmol de tétravalérate de pentaérythritol.

### Exemple CD 7 :

L'exemple CD 1 est répété en remplaçant les 16 mmol de Mesamoll^{®} par 56,7 mmol d'acétate d'éthyle.

### Exemple CD 8 :

L'exemple CD 1 est répété en remplaçant Ti(OnBu)₄ par Zn[O(C=O)C₉H₁₉]₂.

### Exemple CD 9 :

L'exemple CD 1 est répété en remplaçant Ti(OnBu)₄ par Bi[O(C=O)C₉H₁₉]₂.

### Exemple CD 10 :

L'exemple CD 1 est répété en remplaçant Ti(OnBu)₄ par Rb[O(C=O)C₉H₁₉].

### Exemple CD 11 :

L'exemple CD 1 est répété en remplaçant Ti(OnBu)₄ par Cs[O(C=O)C₉H₁₉].

### Exemple CD 12 :

L'exemple CD 1 est répété en remplaçant les 17,6 mmol de Ti(OnBu)₄ par 2,9 mmol de ce même composé, et en remplaçant les 35,2 mmol de DBU par 68,3 mmol.

### Exemple CD 13 :

L'exemple CD 1 est répété en remplaçant les 17,6 mmol de Ti(OnBu)₄ par 8,8 mmol de ce même composé, et en remplaçant les 35,2 mmol de DBU par 55,2 mmol.

### Exemple A (comparatif) :

L'exemple CD 1 est répété sans l'introduction de DBU.

### Exemple B (référence) : composition adhésive avec un catalyseur à l'étain

On reproduit la composition adhésive de l'exemple cd1, en remplaçant les 1 % de composition catalytique cd1 par 0,6 % de dioctylétain et en ajustant les pourcentages des autres ingrédients.

### Exemple C (référence) : composition adhésive avec un catalyseur à base de zinc

On reproduit la composition adhésive de l'exemple cd1, en remplaçant les 1 % de composition catalytique cd1 par 1 % de néodécanoate de Zinc.

Les résultats de temps de réticulation et du test de stabilité sont indiqués dans le Tableau 1 ci-dessous.

### Exemple CDE 1 :

### Composition catalytique (B) :

On prépare une composition catalytique CDE 1 en répétant le protocole de préparation de la composition catalytique de l'exemple CD 1, sauf que l'on procède à l'introduction additionnelle, dans la solution jaune pâle composée de complexe titane/oxime et préalablement à l'ajout des 35,2 mmol de DBU, de 7,7 mmol d'oligomère de TEOS, ladite introduction étant immédiatement suivie de l'agitation du mélange obtenu durant 30 minutes.

### Composition adhésive :

On répète le protocole de préparation de la composition adhésive de l'exemple CD 1, en remplaçant la composition catalytique CD 1, par la composition catalytique CDE 1 ainsi préparée.

La composition adhésive ainsi obtenue est soumise aux tests suivants :
- mesure du temps de réticulation conformément au protocole détaillé à l'exemple cd1,
- mesure de la contrainte à la rupture en traction selon le protocole décrit ci-dessous.

### Mesure de la contrainte à la rupture par essai de traction :

Le principe de la mesure consiste à étirer dans une machine de traction, dont la mâchoire mobile se déplace à une vitesse constante égale à 100 mm/minute, une éprouvette standard constituée de la composition adhésive réticulée et à enregistrer, au moment où se produit la rupture de l'éprouvette, la contrainte de traction appliquée (en MPa).

L'éprouvette standard est en forme d'haltère, de type H2, comme illustré dans la norme internationale ISO 37. La partie étroite de l'haltère utilisée a pour longueur 20 mm, pour largeur 4 mm et pour épaisseur 3 mm.

Pour préparer l'haltère, on applique la composition adhésive à tester dans un moule en téflon, et l'on laisse la composition réticuler durant 14 jours dans les conditions standards (23°C et 50% d'humidité relative).

Les résultats obtenus pour le temps de réticulation (exprimé en minutes) et la contrainte à la rupture (exprimé en MPa) sont indiqués dans le Tableau 2 ci-dessous.

### Exemples CDE 2 à CDE 11 :

### Composition catalytique (B) :

Pour chacun des exemples CDE 2 à CDE 11, on prépare une composition catalytique en répétant l'exemple CDE 1 dans lequel on remplace la composition catalytique de l'exemple CD 1 par, respectivement, la composition catalytique de chacun des exemples CD 2 à CD 11.

### Composition adhésive :

Les compositions adhésives correspondant aux compositions catalytiques ainsi préparées sont obtenues par répétition du protocole de l'exemple CDE 1 en remplaçant simplement la composition catalytique CDE 1 par la composition catalytique appropriée.

Les résultats obtenus pour le temps de réticulation (exprimé en minutes) et la contrainte à la rupture (exprimé en MPa) sont indiqués dans le Tableau 2 ci-dessous.

Les résultats obtenus pour le temps de réticulation et la contrainte à la rupture correspondant aux exemples A, B et C (exprimé en MPa) sont également indiqués dans le Tableau 2 ci-dessous.

### Exemple CDE 20 :

On répète l'exemple CDE 1 en remplaçant l'oligomère de TEOS par le GENIOSIL^{®} GF 69.

Les résultats obtenus pour le temps de réticulation (exprimé en minutes) et la contrainte à la rupture (exprimé en MPa) sont indiqués dans le Tableau 2 ci-dessous.

### Exemple CDE 21 :

On répète l'exemple CDE 1 en remplaçant l'oligomère de TEOS par le Dynasylan^{®} 1124.

Les résultats obtenus pour le temps de réticulation (exprimé en minutes) et la contrainte à la rupture (exprimé en MPa) sont indiqués dans le Tableau 2 ci-dessous.

### Exemple CDE 22 :

On répète l'exemple CDE 1 en remplaçant l'oligomère de TEOS par le DOW CORNING^{®} 3074.

Les résultats obtenus pour le temps de réticulation (exprimé en minutes) et la contrainte à la rupture (exprimé en MPa) sont indiqués dans le Tableau 2 ci-dessous.

### Exemple CDE 23 :

On répète l'exemple CDE 1 en remplaçant l'oligomère de TEOS par le SIT8716.3.

Les résultats obtenus pour le temps de réticulation (exprimé en minutes) et la contrainte à la rupture (exprimé en MPa) sont indiqués dans le Tableau 2 ci-dessous.

**Tableau 1**

| Compositions catalytiques constituées essentiellement de l'amine tertiaire (C) et du composé organométallique (D) | | |
|---|---|---|
| Composition catalytique (B) | Temps de réticulation (en mn) | Stabilité lors du stockage en cartouche (en minute) |
| Exemple A (comp.) | 80 | 2 |
| Exemple B (réf.) | 45 | 2 |
| Exemple C (réf.) | 75 | 2 |
| Exemple CD 1 | 30 | 2 |
| Exemple CD 2 | 45 | 0 |
| Exemple CD 3 | 40 | 0 |
| Exemple CD 4 | 30 | 1 |
| Exemple CD 5 | 35 | 2 |
| Exemple CD 6 | 30 | 2 |
| Exemple CD 7 | 35 | 2 |
| Exemple CD 8 | 40 | 2 |
| Exemple CD 9 | 45 | 2 |
| Exemple CD 10 | 40 | 2 |
| Exemple CD 11 | 35 | 2 |
| Exemple CD 12 | 40 | 2 |
| Exemple CD 13 | 40 | 2 |

**Tableau 2**

| Compositions catalytiques constituées essentiellement de l'amine tertiaire (C), du composé organométallique (D) et du composé organique de silicium (E) | | |
|---|---|---|
| Composition catalytique (B) | Temps de réticulation (en mn) | Contrainte à la rupture (MPa) |
| Exemple A (comp.) | 80 | 2,3 |
| Exemple B (réf.) | 45 | 2,7 |
| Exemple C (réf.) | 75 | 2,0 |
| Exemple CDE 1 | 30 | 2,8 |
| Exemple CDE 2 | 45 | 1,0 |
| Exemple CDE 3 | 40 | 0,4 |
| Exemple CDE 4 | 30 | 2,9 |
| Exemple CDE 5 | 35 | 3,2 |
| Exemple CDE 6 | 30 | 2,9 |
| Exemple CDE 7 | 35 | 3,2 |
| Exemple CDE 8 | 40 | 3,2 |
| Exemple CDE 9 | 45 | 2,9 |
| Exemple CDE 10 | 40 | 2,8 |
| Exemple CDE 11 | 35 | 2,8 |
| Exemple CDE 20 | 40 | 2,7 |
| Exemple CDE 21 | 40 | 3,1 |
| Exemple CDE 22 | 30 | 3,2 |
| Exemple CDE 23 | 45 | 2,7 |

## Revendications

1. Composition adhésive comprenant :
- au moins un polymère silylé (A) comprenant au moins un, de préférence au moins deux groupements de formule (I) :
-Si(R⁴)ₚ(OR⁵)₃₋ₚ (I)
dans laquelle :
- R⁴ représente un radical alkyl linéaire ou ramifié comprenant de 1 à 4 atomes de carbone, avec la possibilité que, quand il y a plusieurs radicaux R⁴, ces derniers soient identiques ou différents ;
- R⁵ représente un radical alkyl linéaire ou ramifié comprenant de 1 à 4 atomes de carbone, avec la possibilité que, quand il y a plusieurs radicaux R⁵, ces derniers soient identiques ou différents, avec la possibilité que deux groupements OR⁵ puissent être engagés dans un même cycle ;
- p est un nombre entier égal à 0, 1 ou 2, et
- une composition catalytique (B) comprenant :
- une amine tertiaire (C) de pKa supérieur à 11 ; et
- un composé organométallique (D) obtenu par réaction :
- d'au moins un alkoxyde métallique (D1) se présentant sous la formule (VIII) :
M(OR)_{y} (VIII)
dans laquelle :
- M représente un atome de métal choisi parmi le titane, le zirconium, l'aluminium, le zinc, le bismuth, le silicium, le hafnium, le barium, le cerium, le cesium, le rubidium ou l'antimoine,
- y est égal à 1, 2, 3 ou 4 selon la valence de l'atome de métal M, et
- R représente un groupement alkyle, alkényle, carbonyl-alkyle, ou carbonyl-alkényle, ledit radical alkyle ou alkényle comprenant de 1 à 22 atomes de carbone, de préférence de 1 à 15 atomes de carbone ;
- avec au moins une oxime (D2) choisie parmi une oxime de formule (V) ou une oxime de formule (VI) : 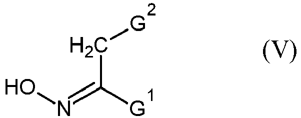 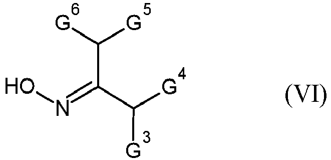
dans lesquelles :
- G¹ est un atome d'hydrogène ou un radical alkyle linéaire ou ramifié comprenant de 1 à 4 atomes de carbone ;
- G² est un atome d'hydrogène ou un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle ou un radical -N(G⁷G⁸) où G⁷ et G⁸ représentent, indépendamment l'un de l'autre, un radical alkyle linéaire ou ramifié comprenant de 1 à 10 atomes de carbone ou un radical alkényle linéaire ou ramifié comprenant de 2 à 10 atomes de carbone ou un radical benzyle ;
- G³ représente soit un atome d'hydrogène, soit un groupement alkyle ayant de 1 à 4 atomes de carbone, soit forme le reste d'un cycle aliphatique ayant entre 4 et 14 atomes de carbone avec les groupements G⁴ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
- G⁴ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone ;
étant entendu qu'au moins un des groupements G³ ou G⁴ forme le reste d'un cycle aliphatique avec au moins un des groupements G⁵ ou G⁶ ;
- G⁵ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
- G⁶ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁵, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
- étant entendu qu'au moins un des groupements G⁵ ou G⁶ forme le reste d'un cycle aliphatique avec au moins un des groupements G³ ou G⁴.

2. Composition adhésive selon la revendication 1, **caractérisée en ce que** le polymère silylé (A) répond à l'une des formules (II), (III) ou (IV) : 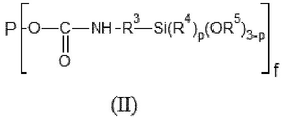 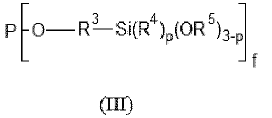 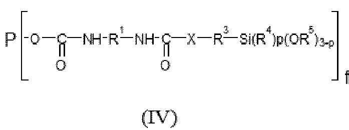 dans lesquelles :
- R⁴, R⁵ et p ont la même signification que dans la formule (I) décrite dans la revendication 1,
- P représente un radical polymérique saturé ou insaturé, linéaire ou ramifié comprenant éventuellement un ou plusieurs hétéroatomes, tels que oxygène, azote, soufre, silicium,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes,
- f est un entier allant de 1 à 6.

3. Composition adhésive selon la revendication 2, **caractérisée en ce que** le polymère silylé (A) répond à l'une des formules (II'), (III') ou (IV') : 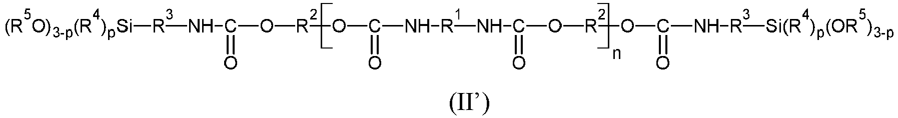 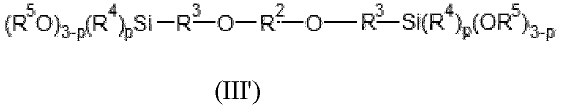 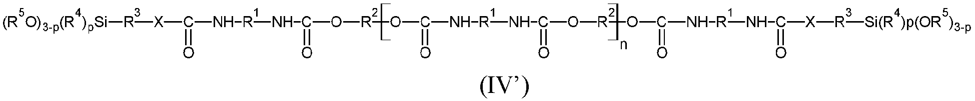 dans lesquelles :
- R¹, R³, R⁴, R⁵, X, R⁷ et p ont la même signification que dans les formules (II), (III) et (IV) décrites dans la revendication 2,
- R² représente un radical divalent hydrocarboné saturé ou insaturé, linéaire ou ramifié comprenant éventuellement un ou plusieurs hétéroatomes, tels que oxygène, azote, soufre, silicium
- n est un entier supérieur ou égal à 0.

4. Composition adhésive selon la revendication 3, **caractérisée en ce que** le polymère silylé (A) est tel que le radical R² inclus dans les formules (II'), (III') et (IV') est dérivé d'un polypropylène glycol.

5. Composition adhésive selon l'une des revendications 1 à 4, **caractérisée en ce que** la composition catalytique (B) comprend, comme amine tertiaire (C), un phosphazene (C1) de formule (VII) : 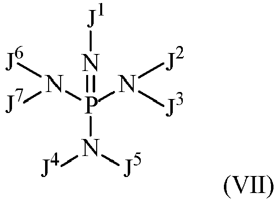 dans laquelle :
- J¹ représente un radical alkyle linéaire ou ramifié comprenant de 1 à 6 atomes de carbone,
- J² et J³ représentent, indépendamment l'un de l'autre, un radical alkyle comprenant de 1 à 4 atomes de carbone ou bien forment ensemble, avec l'atome d'azote auquel ils sont reliés, un hétérocycle aliphatique comprenant de 4 à 6 atomes de carbone ;
- J⁴ et J⁵ représentent, indépendamment l'un de l'autre, un radical alkyle comprenant de 1 à 4 atomes de carbone ou bien forment ensemble, avec l'atome d'azote auquel ils sont reliés, un hétérocycle aliphatique comprenant de 3 à 4 atomes de carbone ;
- J⁶ et J⁷ représentent, indépendamment l'un de l'autre, un radical alkyle comprenant de 1 à 4 atomes de carbone ou bien forment ensemble, avec l'atome d'azote auquel ils sont reliés, un hétérocycle aliphatique comprenant de 4 à 6 atomes de carbone ;
étant entendu en outre que J⁴ (ou J⁵) peut former avec au moins un des groupements J⁶ (ou J⁷) et/ou J² (ou J³), ainsi qu'avec les 2 atomes de d'azote et l'atome de phosphore auxquels il sont reliés, un cycle aliphatique comprenant 3 à 4 atomes de carbone.

6. Composition adhésive selon l'une des revendications 1 à 4, **caractérisée en ce que** la composition catalytique (B) comprend, comme amine tertiaire (C), une guanidine ou une amidine de pKa supérieur à 11.

7. Composition adhésive selon l'une des revendications 1 à 6, **caractérisée en ce que** la composition catalytique (B) comprend un composé organométallique (D) qui est obtenu par réaction de l'alkoxyde métallique (D1) avec une oxime (D2) de formule (VI) dans laquelle :
- G³ et G⁶ représentent chacun un atome d'hydrogène, et/ou
- G⁴ et G⁵ forment un cycle aliphatique présentant de 4 à 14 atomes de carbone.

8. Composition adhésive selon l'une des revendications 1 à 7, **caractérisée en ce que** la composition catalytique (B) comprend un composé organométallique (D) qui est obtenu par réaction de l'alkoxyde métallique (D1) avec l'oxime (D2) selon un ratio molaire alkoxyde:oxime allant de 1:1 à 1:6.

9. Composition adhésive selon l'une des revendications 1 à 8, **caractérisée en ce que** la composition catalytique (B) comprend l'amine tertiaire (C) et le composé organométallique (D) dans une quantité respective correspondant à un rapport : nombre de moles de (C) / nombre de moles de l'alkoxyde métallique (D1) compris dans le domaine allant de 0,5 à 25.

10. Composition adhésive selon l'une des revendications 1 à 9, **caractérisée en ce que** la composition catalytique (B) comprend, outre l'amine tertiaire (C) et le composé organométallique (D), un composé organique de silicium (E) choisi parmi :
- un silsesquioxane (E1) ;
- un composé (E2) de formule (IX) :
K[-Si(OR⁶)₃]ᵥ (IX)
dans laquelle :
- K est un radical hydrocarboné, saturé ou insaturé, linéaire ou ramifié, comprenant de 2 à 15 atomes de carbone et un ou plusieurs hétéroatomes choisis parmi l'azote et l'oxygène ;
- R⁶ représente un groupement alkyle ou alkényle, de préférence alkyle, linéaire ou ramifié ayant de 1 à 5 atomes de carbone, de préférence de 1 à 2 atomes de carbone
- v égale 1, 2 ou 3 ; et
- un oligomère de tetraéthylorthosilicate (E3).

11. Composition adhésive selon l'une des revendications 1 à 10, **caractérisée en ce que** la composition catalytique (B) représente de 0,05% en poids à 10% en poids du poids total de la composition adhésive.

12. Composition catalytique (B) comprenant :
- une amine tertiaire (C) de pKa supérieur à 11 ; et
- un composé organométallique (D) obtenu par réaction :
- d'au moins un alkoxyde métallique (D1) se présentant sous la formule (VIII) :
M(OR)_{y} (VIII)
dans laquelle :
- M représente un atome de métal choisi parmi le titane, le zirconium, l'aluminium, le zinc, le bismuth, le silicium, le hafnium, le barium, le cerium, le cesium, le rubidium ou l'antimoine,
- y est égal à 1, 2, 3 ou 4 selon la valence de l'atome de métal M, et
- R représente un groupement alkyle, alkényle, carbonyl-alkyle, ou carbonyl-alkényle, ledit radical alkyle ou alkényle comprenant de 1 à 22 atomes de carbone, de préférence de 1 à 15 atomes de carbone ;
- avec au moins une oxime (D2) choisie parmi une oxime de formule (V) ou une oxime de formule (VI) : 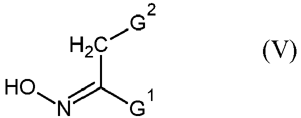 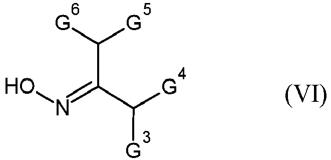
dans lesquelles :
- G¹ est un atome d'hydrogène ou un radical alkyle linéaire ou ramifié comprenant de 1 à 4 atomes de carbone ;
- G² est un atome d'hydrogène ou un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle ou un radical -N(G⁷G⁸) où G⁷ et G⁸ représentent, indépendamment l'un de l'autre, un radical alkyle linéaire ou ramifié comprenant de 1 à 10 atomes de carbone ou un radical alkényle linéaire ou ramifié comprenant de 2 à 10 atomes de carbone ou un radical benzyle ;
- G³ représente soit un atome d'hydrogène, soit un groupement alkyle ayant de 1 à 4 atomes de carbone, soit forme le reste d'un cycle aliphatique ayant entre 4 et 14 atomes de carbone avec les groupements G⁴ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
- G⁴ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁵ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone ;
étant entendu qu'au moins un des groupements G³ ou G⁴ forme le reste d'un cycle aliphatique avec au moins un des groupements G⁵ ou G⁶ ;
- G⁵ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁶, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
- G⁶ représente soit un atome d'hydrogène, soit un groupement alkyle ayant de 1 à 4 atomes de carbone, soit forme le reste d'un cycle aliphatique ayant entre 4 et 14 atomes de carbone avec les groupements G³ et/ou G⁴ et/ou G⁵, ledit cycle aliphatique comprenant éventuellement un ou plusieurs hétéroatomes et/ou une ou plusieurs doubles liaisons et ledit cycle aliphatique étant éventuellement substitué par un ou plusieurs groupements alkyles présentant de 1 à 4 atomes de carbone,
- étant entendu qu'au moins un des groupements G⁵ ou G⁶ forme le reste d'un cycle aliphatique avec au moins un des groupements G³ ou G⁴.

13. Composition catalytique (B) selon la revendication 12, **caractérisée en ce que** l'amine tertiaire (C), l'alkoxyde métallique (D1), l'oxime (D2) et/ou le composé organométallique (D) sont tels que définis dans l'une des revendications 5 à 10 et/ou **caractérisée en ce qu'**elle comprend en outre le composé organique de silicium (E) tel que défini dans la revendication 11.

14. Procédé de collage comprenant l'application de la composition adhésive telle que défini dans l'une quelconque des revendications 1 à 11 sur une surface suivie de la réticulation de ladite composition adhésive.

## Patentansprüche

1. Klebstoffzusammensetzung, umfassend:
- mindestens ein silyliertes Polymer (A), umfassend mindestens eine, vorzugsweise mindestens zwei Gruppen der Formel (I):
-Si(R⁴)ₚ(OR⁵)₃₋ₚ (I),
worin:
- R⁴ einen 1 bis 4 Kohlenstoffatome umfassenden geraden oder verzweigten Alkylrest darstellt, mit der Möglichkeit, dass, wenn es mehrere Reste R⁴ gibt, diese gleich oder verschieden sind;
- R⁵ einen 1 bis 4 Kohlenstoffatome umfassenden geraden oder verzweigten Alkylrest darstellt, mit der Möglichkeit, dass, wenn es mehrere Reste R⁵ gibt, diese gleich oder verschieden sind, mit der Möglichkeit, dass zwei Gruppen OR⁵ in denselben Ring eingebunden sein können;
- p eine ganze Zahl gleich 0, 1 oder 2 ist, und
- eine katalytische Zusammensetzung (B), umfassend:
- ein tertiäres Amin (C) mit einer pKa über 11 und
- eine metallorganische Verbindung (D), die erhalten wird durch Umsetzung:
- mindestens eines Metallalkoxids (D1) gemäß der Formel (VIII):
M(OR)_{y} (VIII),
worin:
- M ein Metallatom darstellt, ausgewählt aus Titan, Zirkon, Aluminium, Zink, Wismut, Silizium, Hafnium, Barium, Cer, Cäsium, Rubidium oder Antimon,
- y je nach der Valenz des Metallatoms M gleich 1, 2, 3 oder 4 ist und
- R eine Alkyl-, Alkenyl- Carbonylalkyl- oder Carbonylalkenylgruppe ist, wobei der Alkyl- oder alkenylrest 1 bis 22 Kohlenstoffatome, vorzugsweise 1 bis 15 Kohlenstoffatome, umfasst;
- mit mindestens einem Oxim (D2), ausgewählt aus einem Oxim der Formel (V) oder einem Oxim der Formel (VI): 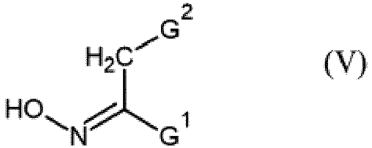 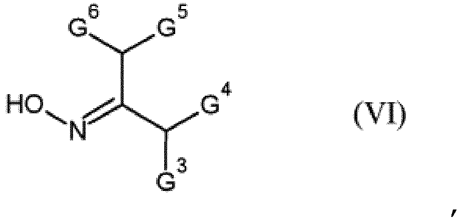
worin:
- G¹ ein Wasserstoffatom oder ein 1 bis 4 Kohlenstoffatome umfassender gerader oder verzweigter Alkylrest ist;
- G² ein Wasserstoffatom oder ein Rest ist, ausgewählt aus einem 1 bis 10 Kohlenstoffatome umfassenden geraden oder verzweigten Alkylrest, einem 2 bis 10 Kohlenstoffatome umfassenden geraden oder verzweigten Alkenylrest, einem 3 bis 10 Kohlenstoffatome umfassenden zyklischen Alkylrest, einem Arylrest oder einem Rest -N(G⁷G⁸), worin G⁷ und G⁸ unabhängig voneinander einen 1 bis 10 Kohlenstoffatome umfassenden geraden oder verzweigten Alkylrest oder einen 2 bis 10 Kohlenstoffatome umfassenden geraden oder verzweigten Alkenylrest oder einen Benzylrest darstellen;
- G³ entweder ein Wasserstoffatom oder eine Alkylgruppe mit 1 bis 4 Kohlenstoffatomen darstellt oder mit den Gruppen G⁴ und/oder G⁵ und/oder G⁶ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
- G⁴ entweder ein Wasserstoffatom oder eine Alkylgruppe mit 1 bis 4 Kohlenstoffatomen darstellt oder mit den Gruppen G³ und/oder G⁵ und/oder G⁶ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
wobei selbstverständlich ist, dass mindestens eine der Gruppen G³ oder G⁴ mit mindestens einer der Gruppen G⁵ oder G⁶ den Rest eines aliphatischen Rings bildet;
- G⁵ entweder ein Wasserstoffatom oder eine Alkylgruppe mit 1 bis 4 Kohlenstoffatomen darstellt oder mit den Gruppen G³ und/oder G⁴ und/oder G⁶ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
- G⁶ entweder ein Wasserstoffatom oder eine Alkylgruppe mit 1 bis 4 Kohlenstoffatomen darstellt oder mit den Gruppen G³ und/oder G⁴ und/oder G⁵ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
wobei selbstverständlich ist, dass mindestens eine der Gruppen G⁵ oder G⁶ mit mindestens einer der Gruppen G³ oder G⁴ den Rest eines aliphatischen Rings bildet.

2. Klebstoffzusammensetzung nach Anspruch 1, **dadurch gekennzeichnet, dass** das silylierte Polymer (A) einer der Formeln (II), (III) oder (IV) entspricht: 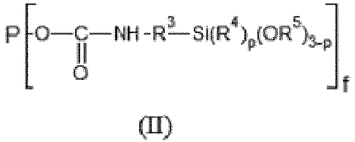 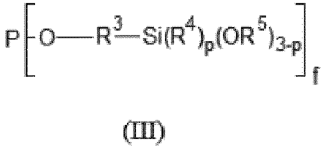 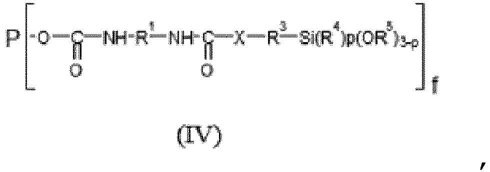 worin:
- R⁴, R⁵ und p die gleiche Bedeutung wie in Formel (I) nach Anspruch 1 haben,
- P einen gesättigten oder ungesättigten, geraden oder verzweigten polymeren Rest darstellt, der gegebenenfalls ein oder mehrere Heteroatome, wie Sauerstoff, Stickstoff, Schwefel, Silizium, umfasst,
- R¹ einen zweiwertigen, 5 bis 15 Kohlenstoffatome umfassenden Kohlenwasserstoffrest darstellt, der aromatisch oder aliphatisch, gerade, verzweigt oder zyklisch sein kann,
- R³ einen zweiwertigen, 1 bis 6 Kohlenstoffatome umfassenden geraden oder verzweigten Alkylenrest darstellt,
- X einen zweiwertigen Rest, ausgewählt aus -NH-, -NR⁷- oder -S-, darstellt,
- R⁷ einen 1 bis 20 Kohlenstoffatome umfassenden geraden oder verzweigten Alkylrest darstellt, der auch ein oder mehrere Heteroatome umfassen kann,
- f eine ganze Zahl von 1 bis 6 ist.

3. Klebstoffzusammensetzung nach Anspruch 2, **dadurch gekennzeichnet, dass** das silylierte Polymer (A) einer der Formeln (II'), (III') oder (IV') entspricht: 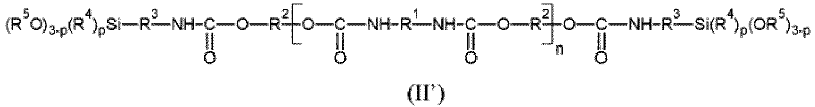 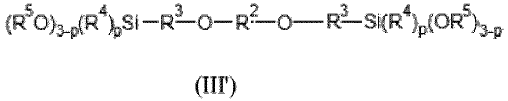 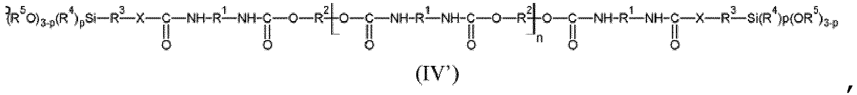 worin:
- R¹, R³, R⁴, R⁵, X, R⁷ und p die gleiche Bedeutung wie in den Formeln (II), (III) und (IV) nach Anspruch 2 haben,
- R² einen zweiwertigen, gesättigten oder ungesättigten, geraden oder verzweigten Kohlenwasserstoffrest darstellt, der gegebenenfalls ein oder mehrere Heteroatome, wie Sauerstoff, Stickstoff, Schwefel, Silizium, umfasst,
- n eine ganze Zahl größer als oder gleich 0 ist.

4. Klebstoffzusammensetzung nach Anspruch 3, **dadurch gekennzeichnet, dass** das silylierte Polymer (A) so ist, dass der Rest R² in den Formeln (II'), (III') und (IV') von einem Polypropylenglykol herrührt.

5. Klebstoffzusammensetzung nach einem der Ansprüche 1 bis 4, **dadurch gekennzeichnet, dass** die katalytische Zusammensetzung (B) als tertiäres Amin (C) ein Phosphazen (C1) der Formel (VII) umfasst: 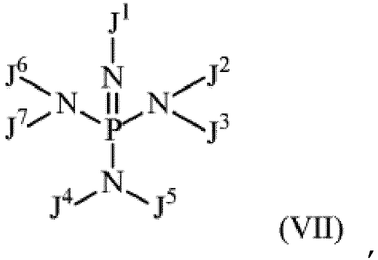 worin:
- J¹ einen 1 bis 6 Kohlenstoffatome umfassenden geraden oder verzweigten Alkylrest darstellt,
- J² und J³ unabhängig voneinander einen 1 bis 4 Kohlenstoffatome umfassenden Alkylrest darstellen oder aber zusammen mit dem Stickstoffatom, an das sie gebunden sind, einen 4 bis 6 Kohlenstoffatome umfassenden aliphatischen Heterocyclus bilden;
- J⁴ und J⁵ unabhängig voneinander einen 1 bis 4 Kohlenstoffatome umfassenden Alkylrest darstellen oder aber zusammen mit dem Stickstoffatom, an das sie gebunden sind, einen 3 bis 4 Kohlenstoffatome umfassenden aliphatischen Heterocyclus bilden;
- J⁶ und J⁷ unabhängig voneinander einen 1 bis 4 Kohlenstoffatome umfassenden Alkylrest darstellen oder aber zusammen mit dem Stickstoffatom, an das sie gebunden sind, einen 4 bis 6 Kohlenstoffatome umfassenden aliphatischen Heterocyclus bilden;
wobei außerdem selbstverständlich ist, dass J⁴ (oder J⁵) mit mindestens einer der Gruppen J⁶ (oder J⁷) und/oder J² (oder J³) sowie mit den 2 Stickstoffatomen und dem Phosphoratom, an das sie gebunden sind, einen 3 bis 4 Kohlenstoffatome umfassenden aliphatischen Ring bilden kann.

6. Klebstoffzusammensetzung nach einem der Ansprüche 1 bis 4, **dadurch gekennzeichnet, dass** die katalytische Zusammensetzung (B) als tertiäres Amin (C) ein Guanidin oder ein Amidin mit einer pKa über 11 umfasst.

7. Klebstoffzusammensetzung nach einem der Ansprüche 1 bis 6, **dadurch gekennzeichnet, dass** die katalytische Zusammensetzung (B) eine metallorganische Verbindung (D) umfasst, die erhalten wird durch Umsetzung des Metallalkoxids (D1) mit einem Oxim (D2) der Formel (VI), worin:
- G³ und G⁶ jeweils ein Wasserstoffatom darstellen und/oder
- G⁴ und G⁵ einen aliphatischen Ring mit 4 bis 14 Kohlenstoffatomen bilden.

8. Klebstoffzusammensetzung nach einem der Ansprüche 1 bis 7, **dadurch gekennzeichnet, dass** die katalytische Zusammensetzung (B) eine metallorganische Verbindung (D) umfasst, die durch Umsetzen des Metallalkoxids (D1) mit dem Oxim (D2) in einem Molverhältnis von Alkoxid:Oxim im Bereich von 1:1 bis 1:6 erhalten wird.

9. Klebstoffzusammensetzung nach einem der Ansprüche 1 bis 8, **dadurch gekennzeichnet, dass** die katalytische Zusammensetzung (B) das tertiäre Amin (C) und die metallorganische Verbindung (D) in einer jeweiligen Menge umfasst, die einem Verhältnis der Anzahl Mole (C)/Anzahl Mole des Metallalkoxids (D1) im Bereich von 0,5 bis 25 entspricht.

10. Klebstoffzusammensetzung nach einem der Ansprüche 1 bis 9, **dadurch gekennzeichnet, dass** die katalytische Zusammensetzung (B) außer dem tertiären Amin (C) und der metallorganischen Verbindung (D) eine siliziumorganische Verbindung (E) umfasst, ausgewählt aus:
- ein Silsesquioxan (E1);
- einer Verbindung (E2) der Formel (IX):
K[-Si(OR⁶)₃]ᵥ (IX)
worin:
- K ein gesättigter oder ungesättigter, gerader oder verzweigter Kohlenwasserstoffrest ist, der 2 bis 15 Kohlenstoffatome und ein oder mehrere Heteroatome, ausgewählt aus Stickstoff und Sauerstoff, umfasst;
- R⁶ eine gerade oder verzweigte Alkyl- oder Alkenyl-, vorzugsweise Alkylgruppe mit 1 bis 5 Kohlenstoffatomen, vorzugsweise 1 bis 2 Kohlenstoffatomen darstellt;
- v gleich 1, 2 oder 3, und
- einem Tetraethylorthosilikat-Oligomer (E3).

11. Klebstoffzusammensetzung nach einem der Ansprüche 1 bis 10, **dadurch gekennzeichnet, dass** die katalytische Zusammensetzung (B) 0,05 Gew.-% bis 10 Gew.-%, bezogen auf das Gesamtgewicht der Klebstoffzusammensetzung, ausmacht.

12. Katalytische Zusammensetzung (B), umfassend:
- ein tertiäres Amin (C) mit einer pKa über 11 und
- eine metallorganische Verbindung (D), die erhalten wird durch Umsetzung:
- mindestens eines Metallalkoxids (D1) gemäß der Formel (VIII):
M(OR)_{y} (VIII),
worin:
- M ein Metallatom, ausgewählt aus Titan, Zirkon, Aluminium, Zink, Wismut, Silizium, Hafnium, Barium, Cer, Cäsium, Rubidium oder Antimon, darstellt,
- y je nach der Valenz des Metallatoms M gleich 1, 2, 3 oder 4 ist und
- R eine Alkyl-, Alkenyl- Carbonylalkyl- oder Carbonylalkenylgruppe darstellt, wobei der Alkyl- oder alkenylrest 1 bis 22 Kohlenstoffatome, vorzugsweise 1 bis 15 Kohlenstoffatome umfasst;
- mit mindestens einem Oxim (D2), ausgewählt aus einem Oxim der Formel (V) oder einem Oxim der Formel (VI) : 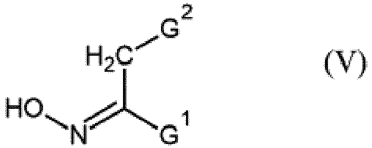 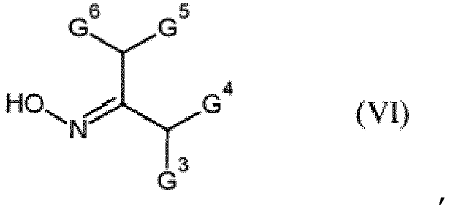
worin:
- G¹ ein Wasserstoffatom oder ein 1 bis 4 Kohlenstoffatome umfassender gerader oder verzweigter Alkylrest ist;
- G² ein Wasserstoffatom oder ein Rest ist, ausgewählt aus einem 1 bis 10 Kohlenstoffatome umfassenden geraden oder verzweigten Alkylrest, einem 2 bis 10 Kohlenstoffatome umfassenden geraden oder verzweigten Alkenylrest, einem 3 bis 10 Kohlenstoffatome umfassenden zyklischen Alkylrest, einem Arylrest oder einem Rest -N(G⁷G⁸), worin G⁷ und G⁸ unabhängig voneinander einen 1 bis 10 Kohlenstoffatome umfassenden geraden oder verzweigten Alkylrest oder einen 2 bis 10 Kohlenstoffatome umfassenden geraden oder verzweigten Alkenylrest oder einen Benzylrest darstellen;
- G³ entweder ein Wasserstoffatom oder eine Alkylgruppe mit 1 bis 4 Kohlenstoffatomen darstellt oder mit den Gruppen G⁴ und/oder G⁵ und/oder G⁶ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
- G⁴ entweder ein Wasserstoffatom oder eine Alkylgruppe mit 1 bis 4 Kohlenstoffatomen darstellt oder mit den Gruppen G³ und/oder G⁵ und/oder G⁶ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
wobei selbstverständlich ist, dass mindestens eine der Gruppen G³ oder G⁴ mit mindestens einer der Gruppen G⁵ oder G⁶ den Rest eines aliphatischen Rings bildet;
- G⁵ entweder ein Wasserstoffatom oder eine Alkylgruppe mit 1 bis 4 Kohlenstoffatomen darstellt oder mit den Gruppen G³ und/oder G⁴ und/oder G⁶ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
- G⁶ entweder ein Wasserstoffatom oder eine Alkylgruppe mit 1 bis 4 Kohlenstoffatomen darstellt oder mit den Gruppen G³ und/oder G⁴ und/oder G⁵ den Rest eines aliphatischen Rings mit zwischen 4 und 14 Kohlenstoffatomen bildet, wobei der aliphatische Ring gegebenenfalls ein oder mehrere Heteroatome und/oder eine oder mehrere Doppelbindungen umfasst und der aliphatische Ring gegebenenfalls mit einer oder mehreren Alkylgruppen mit 1 bis 4 Kohlenstoffatomen substituiert ist;
wobei selbstverständlich ist, dass mindestens eine der Gruppen G⁵ oder G⁶ mit mindestens einer der Gruppen G³ oder G⁴ den Rest eines aliphatischen Rings bildet.

13. Katalytische Zusammensetzung (B) nach Anspruch 12, **dadurch gekennzeichnet, dass** das tertiäre Amin (C), das Metallalkoxid (D1), das Oxim (D2) und/oder die metallorganische Verbindung (D) Verbindungen nach einem der Ansprüche 5 bis 10 sind, und/oder **dadurch gekennzeichnet, dass** sie außerdem die siliziumorganische Verbindung (E) nach Anspruch 11 umfasst.

14. Klebeverfahren, das das Aufbringen der Klebstoffzusammensetzung nach einem der Ansprüche 1 bis 11 auf eine Oberfläche, gefolgt von Vernetzung der Klebstoffzusammensetzung, umfasst.

## Claims

1. Adhesive composition comprising:
- at least one silylated polymer (A) comprising at least one, preferably at least two, groups of formula (I):
-Si(R⁴)ₚ(OR⁵)₃₋ₚ (I)
in which:
- R⁴ represents a linear or branched alkyl radical comprising from 1 to 4 carbon atoms, with the possibility that when there are several radicals R⁴, these radicals are identical or different;
- R⁵ represents a linear or branched alkyl radical comprising from 1 to 4 carbon atoms, with the possibility that when there are several radicals R⁵, these radicals are identical or different, with the possibility that two groups OR⁵ may be engaged in the same ring;
- p is an integer equal to 0, 1 or 2; and
- a catalytic composition (B) comprising:
- a tertiary amine (C) with a pKa of greater than 11; and
- an organometallic compound (D) obtained by reacting:
- at least one metal alkoxide (D1) of formula (VIII):
M(OR)_{y} (VIII)
in which:
- M represents a metal atom chosen from titanium, zirconium, aluminium, zinc, bismuth, silicon, hafnium, barium, cerium, caesium, rubidium and antimony,
- y is equal to 1, 2, 3 or 4 depending on the valency of the metal atom M, and
- R represents an alkyl, alkenyl, carbonyl-alkyl or carbonyl-alkenyl group, said alkyl or alkenyl radical comprising from 1 to 22 carbon atoms, preferably from 1 to 15 carbon atoms;
- with at least one oxime (D2) chosen from an oxime of formula (V) or an oxime of formula (VI): 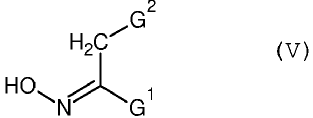 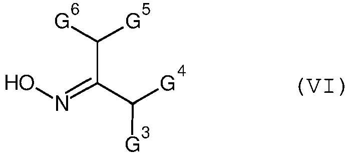
in which:
- G¹ is a hydrogen atom or a linear or branched alkyl radical comprising from 1 to 4 carbon atoms;
- G² is a hydrogen atom or a radical chosen from a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical or a radical -N(G⁷G⁸) in which G⁷ and G⁸ represent, independently of each other, a linear or branched alkyl radical comprising from 1 to 10 carbon atoms or a linear or branched alkenyl radical comprising from 2 to 10 carbon atoms or a benzyl radical;
- G³ represents either a hydrogen atom, or an alkyl group containing from 1 to 4 carbon atoms, or forms the residue of an aliphatic ring containing between 4 and 14 carbon atoms with the groups G⁴ and/or G⁵ and/or G⁶, said aliphatic ring optionally comprising one or more heteroatoms and/or one or more double bonds and said aliphatic ring being optionally substituted with one or more alkyl groups containing from 1 to 4 carbon atoms;
- G⁴ represents either a hydrogen atom, or an alkyl group containing from 1 to 4 carbon atoms, or forms the residue of an aliphatic ring containing between 4 and 14 carbon atoms with the groups G³ and/or G⁵ and/or G⁶, said aliphatic ring optionally comprising one or more heteroatoms and/or one or more double bonds and said aliphatic ring being optionally substituted with one or more alkyl groups containing from 1 to 4 carbon atoms;
it being understood that at least one of the groups G³ or G⁴ forms the residue of an aliphatic ring with at least one of the groups G⁵ or G⁶;
- G⁵ represents either a hydrogen atom, or an alkyl group containing from 1 to 4 carbon atoms, or forms the residue of an aliphatic ring containing between 4 and 14 carbon atoms with the groups G³ and/or G⁴ and/or G⁶, said aliphatic ring optionally comprising one or more heteroatoms and/or one or more double bonds and said aliphatic ring being optionally substituted with one or more alkyl groups containing from 1 to 4 carbon atoms;
- G⁶ represents either a hydrogen atom, or an alkyl group containing from 1 to 4 carbon atoms, or forms the residue of an aliphatic ring containing between 4 and 14 carbon atoms with the groups G³ and/or G⁴ and/or G⁵, said aliphatic ring optionally comprising one or more heteroatoms and/or one or more double bonds and said aliphatic ring being optionally substituted with one or more alkyl groups containing from 1 to 4 carbon atoms;
- it being understood that at least one of the groups G⁵ or G⁶ forms the residue of an aliphatic ring with at least one of the groups G³ or G⁴.

2. Adhesive composition according to Claim 1, **characterized in that** the silylated polymer (A) corresponds to one of the formulae (II), (III) or (IV): 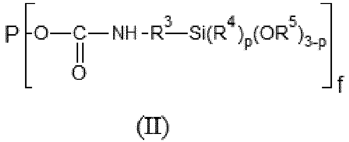 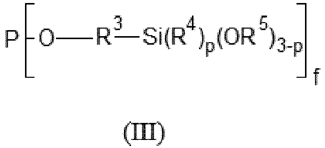 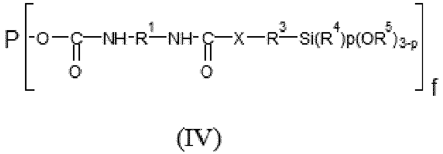 in which:
- R⁴, R⁵ and p have the same meaning as in formula (I) described in claim 1,
- P represents a saturated or unsaturated, linear or branched polymeric radical optionally comprising one or more heteroatoms, such as oxygen, nitrogen, sulfur or silicon,
- R¹ represents a divalent hydrocarbon-based radical comprising from 5 to 15 carbon atoms, which may be aromatic or aliphatic, linear, branched or cyclic,
- R³ represents a linear or branched divalent alkylene radical comprising from 1 to 6 carbon atoms,
- X represents a divalent radical chosen from -NH-,-NR⁷- or -S-,
- R⁷ represents a linear or branched alkyl radical comprising from 1 to 20 carbon atoms and which may also comprise one or more heteroatoms,
- f is an integer ranging from 1 to 6.

3. Adhesive composition according to Claim 2, **characterized in that** the silylated polymer (A) corresponds to one of the formulae (II'), (III') or (IV'): 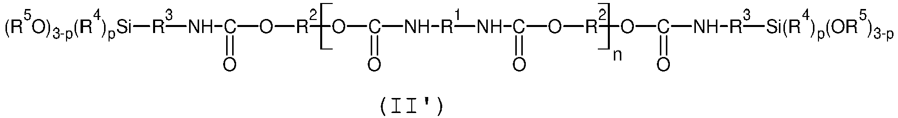 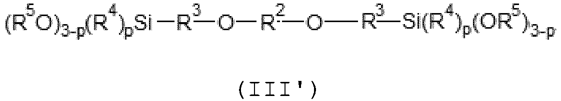 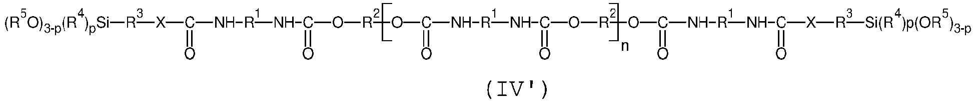 in which:
- R¹, R³, R⁴, R⁵, X, R⁷ and p have the same meaning as in formulae (II), (III) and (IV) described in claim 2,
- R² represents a saturated or unsaturated, linear or branched divalent hydrocarbon-based radical optionally comprising one or more heteroatoms, such as oxygen, nitrogen, sulfur or silicon,
- n is an integer greater than or equal to 0.

4. Adhesive composition according to Claim 3, **characterized in that** the silylated polymer (A) is such that the radical R² included in formulae (II'), (III') and (IV') is derived from a polypropylene glycol.

5. Adhesive composition according to one of Claims 1 to 4, **characterized in that** the catalytic composition (B) comprises, as tertiary amine (C), a phosphazene (C1) of formula (VII): 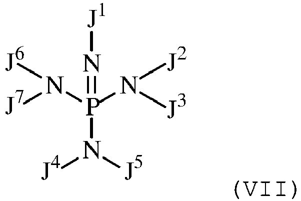 in which:
- J¹ represents a linear or branched alkyl radical comprising from 1 to 6 carbon atoms,
- J² and J³ represent, independently of each other, an alkyl radical comprising from 1 to 4 carbon atoms or together form, with the nitrogen atom to which they are attached, an aliphatic heterocycle comprising from 4 to 6 carbon atoms;
- J⁴ and J⁵ represent, independently of each other, an alkyl radical comprising from 1 to 4 carbon atoms or together form, with the nitrogen atom to which they are attached, an aliphatic heterocycle comprising from 3 to 4 carbon atoms;
- J⁶ and J⁷ represent, independently of each other, an alkyl radical comprising from 1 to 4 carbon atoms or together form, with the nitrogen atom to which they are attached, an aliphatic heterocycle comprising from 4 to 6 carbon atoms;
it also being understood that J⁴ (or J⁵) may form with at least one of the groups J⁶ (or J⁷) and/or J² (or J³), and also with the two nitrogen atoms and the phosphorus atom to which they are attached, an aliphatic ring comprising 3 to 4 carbon atoms.

6. Adhesive composition according to one of Claims 1 to 4, **characterized in that** the catalytic composition (B) comprises, as tertiary amine (C), a guanidine or an amidine with a pKa of greater than 11.

7. Adhesive composition according to one of Claims 1 to 6, **characterized in that** the catalytic composition (B) comprises an organometallic compound (D) which is obtained by reaction of the metal alkoxide (D1) with an oxime (D2) of formula (VI) in which:
- G³ and G⁶ each represent a hydrogen atom, and/or
- G⁴ and G⁵ form an aliphatic ring containing from 4 to 14 carbon atoms.

8. Adhesive composition according to one of Claims 1 to 7, **characterized in that** the catalytic composition (B) comprises an organometallic compound (D) which is obtained by reacting the metal alkoxide (D1) with the oxime (D2) in an alkoxide/oxime mole ratio ranging from 1:1 to 1:6.

9. Adhesive composition according to one of Claims 1 to 8, **characterized in that** the catalytic composition (B) comprises the tertiary amine (C) and the organometallic compound (D) in a respective amount corresponding to a ratio: number of moles of (C)/number of moles of the metal alkoxide (D1) within the range from 0.5 to 25.

10. Adhesive composition according to one of Claims 1 to 9, **characterized in that** the catalytic composition (B) comprises, besides the tertiary amine (C) and the organometallic compound (D), an organosilicon compound (E) chosen from:
- a silsesquioxane (E1);
- a compound (E2) of formula (IX):
K[-Si(OR⁶)₃]ᵥ (IX)
in which:
- K is a saturated or unsaturated, linear or branched hydrocarbon-based radical comprising from 2 to 15 carbon atoms and one or more heteroatoms chosen from nitrogen and oxygen;
- R⁶ represents a linear or branched alkyl or alkenyl group, preferably alkyl, containing from 1 to 5 carbon atoms, preferably from 1 to 2 carbon atoms;
- v is equal to 1, 2 or 3; and
- a tetraethyl orthosilicate oligomer (E3).

11. Adhesive composition according to one of Claims 1 to 10, **characterized in that** the catalytic composition (B) represents from 0.05% by weight to 10% by weight relative to the total weight of the adhesive composition.

12. Catalytic composition (B) comprising:
- a tertiary amine (C) with a pKa of greater than 11; and
- an organometallic compound (D) obtained by reacting:
- at least one metal alkoxide (D1) of formula (VIII):
M(OR)_{y} (VIII)
in which:
- M represents a metal atom chosen from titanium, zirconium, aluminium, zinc, bismuth, silicon, hafnium, barium, cerium, caesium, rubidium and antimony,
- y is equal to 1, 2, 3 or 4 depending on the valency of the metal atom M, and
- R represents an alkyl, alkenyl, carbonyl-alkyl or carbonyl-alkenyl group, said alkyl or alkenyl radical comprising from 1 to 22 carbon atoms, preferably from 1 to 15 carbon atoms;
- with at least one oxime (D2) chosen from an oxime of formula (V) or an oxime of formula (VI): 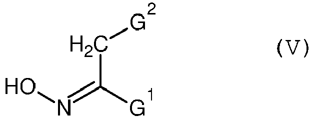 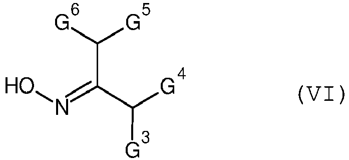
in which:
- G¹ is a hydrogen atom or a linear or branched alkyl radical comprising from 1 to 4 carbon atoms;
- G² is a hydrogen atom or a radical chosen from a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical or a radical -N(G⁷G⁸) in which G⁷ and G⁸ represent, independently of each other, a linear or branched alkyl radical comprising from 1 to 10 carbon atoms or a linear or branched alkenyl radical comprising from 2 to 10 carbon atoms or a benzyl radical;
- G³ represents either a hydrogen atom, or an alkyl group containing from 1 to 4 carbon atoms, or forms the residue of an aliphatic ring containing between 4 and 14 carbon atoms with the groups G⁴ and/or G⁵ and/or G⁶, said aliphatic ring optionally comprising one or more heteroatoms and/or one or more double bonds and said aliphatic ring being optionally substituted with one or more alkyl groups containing from 1 to 4 carbon atoms;
- G⁴ represents either a hydrogen atom, or an alkyl group containing from 1 to 4 carbon atoms, or forms the residue of an aliphatic ring containing between 4 and 14 carbon atoms with the groups G³ and/or G⁵ and/or G⁶, said aliphatic ring optionally comprising one or more heteroatoms and/or one or more double bonds and said aliphatic ring being optionally substituted with one or more alkyl groups containing from 1 to 4 carbon atoms;
it being understood that at least one of the groups G³ or G⁴ forms the residue of an aliphatic ring with at least one of the groups G⁵ or G⁶;
- G⁵ represents either a hydrogen atom, or an alkyl group containing from 1 to 4 carbon atoms, or forms the residue of an aliphatic ring containing between 4 and 14 carbon atoms with the groups G³ and/or G⁴ and/or G⁶, said aliphatic ring optionally comprising one or more heteroatoms and/or one or more double bonds and said aliphatic ring being optionally substituted with one or more alkyl groups containing from 1 to 4 carbon atoms;
- G⁶ represents either a hydrogen atom, or an alkyl group containing from 1 to 4 carbon atoms, or forms the residue of an aliphatic ring containing between 4 and 14 carbon atoms with the groups G³ and/or G⁴ and/or G⁵, said aliphatic ring optionally comprising one or more heteroatoms and/or one or more double bonds and said aliphatic ring being optionally substituted with one or more alkyl groups containing from 1 to 4 carbon atoms;
- it being understood that at least one of the groups G⁵ or G⁶ forms the residue of an aliphatic ring with at least one of the groups G³ or G⁴.

13. Catalytic composition (B) according to Claim 12, **characterized in that** the tertiary amine (C), the metal alkoxide (D1), the oxime (D2) and/or the organometallic compound (D) are as defined in one of Claims 5 to 10 and/or **characterized in that** it also comprises the organosilicon compound (E) as defined in Claim 11.

14. Bonding process comprising the application of the adhesive composition as defined in any one of Claims 1 to 11 to a surface, followed by the crosslinking of said adhesive composition.
